# EUROPEAN PATENT SPECIFICATION

(11) **EP 3 820 192 B1**
(45) Date of publication and mention of the grant of the patent: **25.10.2023**
(21) Application number: 19842127.3
(22) Date of filing: 05.07.2019
(51) Int. Cl.: H04W 48/20, H04W 48/18

(54) **COMMUNICATION METHOD, ACCESS NETWORK DEVICE, AND TERMINAL DEVICE**
KOMMUNIKATIONSVERFAHREN, ZUGANGSNETZWERKVORRICHTUNG UND ENDGERÄTEVORRICHTUNG
PROCÉDÉ DE COMMUNICATION, DISPOSITIF DE RÉSEAU D'ACCÈS ET DISPOSITIF TERMINAL

(30) Priority: 27.07.2018 CN 201810844820
(43) Date of publication of application: 12.05.2021
(73) Proprietor: Huawei Technologies Co., Ltd., Longgang District Shenzhen Guangdong 518129 (CN)
(72) Inventor: JIN, Yinghao, Shenzhen, Guangdong 518129 (CN); HAN, Feng, Shenzhen, Guangdong 518129 (CN); TAN, Wei, Shenzhen, Guangdong 518129 (CN)
(74) Representative: MERH-IP Matias Erny Reichl Hoffmann Patentanwälte PartG mbB
(86) International application number: PCT/CN2019/094828
(87) International publication number: WO 2020/019961

(56) References cited:
- EP-A1- 3 595 358
- WO-A1-2017/119844
- WO-A1-2017/140340
- WO-A1-2018/029930
- WO-A1-2018/029930
- WO-A1-2018/177368
- CN-A- 107 347 205
- ZTE: "Idle mode behaviour for NW slice", 3GPP DRAFT; R2-1708109 IDLE MODE BEHAVIOUR FOR NW SLICE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Berlin, Germany; 20170821 - 20170825 20 August 2017 (2017-08-20), XP051318012, Retrieved from the Internet: URL:http://www.3gpp.org/ftp/Meetings_3GPP_ SYNC/RAN2/Docs/ [retrieved on 2017-08-20]
- ZTE: "Some Issues with NW Slicing in Multiple Connectivity Contexts", 3GPP DRAFT; R3-162122 SOME ISSUES WITH NW SLICING IN MULTIPLE CONNECTIVITY CONTEXT V3, 3RD GENERATION PARTNERSHIP PROJECT (3GPP), MOBILE COMPETENCE CENTRE ; 650, ROUTE DES LUCIOLES ; F-06921 SOPHIA-AN , vol. RAN WG3, no. Sophia-Antipolis, France; 20161010 - 20161014 6 October 2016 (2016-10-06), XP051151783, Retrieved from the Internet: URL:http://www.3gpp.org/ftp/Meetings_3GPP_ SYNC/RAN3/Docs/ [retrieved on 2016-10-06]
- NOKIA et al.: "Radio resource isolation requirements", 3GPP TSG-RAN WG2 NR Adhoc, R2-1700078, 19 January 2017 (2017-01-19), XP051203629,

## Description

### TECHNICAL FIELD

This application relates to the communications field, and more specifically, to a communication method, an access network device, and a terminal device.

### BACKGROUND

The network slicing technology has been proposed as a key technology for researching future communications systems, so that future networks can support a broad range of services to serve various industries of society. For example, enhanced mobile broadband (enhanced mobile broadband, eMBB) services represented by virtual reality and augmented reality, ultra-reliable low-latency communications (ultra-reliable and low-latency, URLLC) services represented by self-driving and industrial control, and massive internet of things (massive machine type of communication, mMTC) services represented by intelligent logistics and sensors, will greatly expand the service scope of the communications systems.

Allowed network slice selection assistance information (allowed network slice selection assistance information, Allowed NSSAI) is network slice identification information assigned by a core network device to a terminal device when a registration area is updated or the terminal device performs initial access. The allowed NSSAI is used to indicate a session that can be initiated by the terminal device in a current registration area. That is, a network slice to which the session to be initiated belongs can only be in the allowed NSSAI. However, in the current technology, when a core network device assigns a registration area to a terminal device, that is, assigns allowed NSSAI to the terminal device, a quantity of network slices that can be used to initiate a session decreases, or system signaling overheads increase due to frequent registration area update procedures.
Document WO 2018/29930 A1 discloses a handover of a radio terminal from a first network to a second network, a target RAN node is operates to: receive, from a core network , slice information about a network slice which is included in the second network and to which the radio terminal is to be connected; create, upon receiving the slice information, radio resource configuration information that is to be used by the radio terminal after the handover in the second network; and transmit this radio resource configuration information through the first network to the radio terminal.

### SUMMARY

This application provides a communication method, an access network device, and a terminal device, to reduce signaling overheads and improve communication efficiency of a radio access network. The invention is defined by the independent claims.

According to a first aspect, a communication method is provided. The method includes the features of independent claim 1.

In this embodiment of this application, network slices supported by the first access network device may be partly different from network slices supported by the second access network device. The first access network device determines the second access network device, and establishes, via the second access network device, a session corresponding to a network slice that is not supported by the first access network device. This implements dual connections between the terminal device and the first access network device and between the terminal device and the second access network device. This ensures that when a registration area is not updated, there are more network slices that can be used to initiate a session, reduces signaling overheads, and improves communication efficiency of a radio access network.

It should be understood that the network slices supported by the first access network device may be partly different from the network slices supported by the second access network device, and the first access network device determines that the second access network device is used to implement dual connections. The session corresponding to the network slice that is not supported by the first access network device may be established via the second access network device, and sessions corresponding to the network slices supported by both the first access network device and the second access network device may be established via the first access network device.

It should be understood that the terminal device may measure a channel condition of any cell. In other words, the measured cell may be a cell inside the registration area, or may be any cell outside the registration area. The first access network device is an access network device of a cell that serves the current terminal device, the second access network device is a neighboring access network device of the first access network device, and the neighboring device may be geographically neighboring or close to the first access network device.

For example, the first access network device may be understood as a master access network device (for example, a macro base station), namely, an access network device currently connected to the terminal device, and the second access network device may be understood as a secondary access network device (for example, a micro base station), namely, another access network device to which the terminal device needs to establish dual connections.

In a possible implementation, that the first access network device determines a second access network device includes:
The first access network device determines the second access network device based on the network slice corresponding to the session and information about a network slice supported by at least one access network device.

In this embodiment of this application, there may be a communications interface between the first access network device and the at least one access network device. The first access network device may communicate with the at least one access network device to obtain the information about the network slice corresponding to the at least one access network device, and determine the second access network device that supports the network slice corresponding to the session. This ensures that when the registration area is not updated, there are more network slices that can be used to initiate a session, and improves communication efficiency of the radio access network.

In a possible implementation, the method further includes: The first access network device sends a second message to the terminal device, where the second message includes first indication information, the first indication information is used to indicate the terminal device to report a measurement report on at least one measured cell, and the measured cell supports the network slice corresponding to the session.

The first access network device receives the measurement report sent by the terminal device.

In a possible implementation, the method further includes: The first access network device sends a second message to the terminal device, where the second message includes second indication information, the second indication information is used to indicate the terminal device to report a measurement report on at least one measured cell, and the measured cell belongs to a tracking area that supports the network slice corresponding to the session.

The first access network device receives the measurement report sent by the terminal device.

Optionally, the second message may be a measurement report request message, the first indication information may be identification information of the network slice, and the second indication information may be identification information of the tracking area.

It should be understood that when the terminal device receives the measurement report request information, the terminal device may measure channel quality of any measured cell, that is, the measured cell may be any cell. In other words, in this case, the measured cell may be any measured cell in the registration area, or may be any measured cell outside the registration area.

In an example, the second message may include the first indication information, for example, network slice information. Based on the network slice information in the measurement report, when reporting the measurement report to the first access network device, the terminal device may include only measurement report information of a measured cell that supports the network slice, and does not need to report measurement report information of a cell that does not support the network slice. In this way, air interface resource overheads are reduced.

For example, the terminal device receives the second message, and measures channel conditions of a first measured cell, a second measured cell, and a third measured cell, where the first measured cell supports a network slice 2, the second measured cell supports a network slice 3, and the third cell supports a network slice 5. The first indication information includes the identification information of the network slice corresponding to the session, for example, an identifier of the network slice 5. In this case, the terminal device may report only a measurement report for the third cell to the first access network device, and does not need to report measurement reports for the first measured cell and the second measured cell.

In an example, the second message may include the second indication information, for example, information about a tracking area. Based on the information about the tracking area, when reporting the measurement report to the first access network device, the terminal device may include only measurement report information of a measured cell of information, and does not need to report measurement report information of a cell that does not support the network slice information. In this way, air interface resource overheads are reduced.

For example, the terminal device receives the second message, and measures channel conditions of a first measured cell, a second measured cell, and a third measured cell, where a tracking area 1 to which the first measured cell belongs supports a network slice 2, a tracking area 2 to which the second measured cell belongs supports a network slice 3, and a tracking area 3 to which the third measured cell belongs supports a network slice 5. The second indication information includes the identification information of the tracking area, for example, identification information of the tracking area 3, and a network slice corresponding to the tracking area includes the network slice corresponding to the session. In this case, the terminal device may report only a measurement report for the third cell to the first access network device, and does not need to report measurement reports for the first measured cell and the second measured cell.

In this embodiment of this application, the terminal device may select, based on the second message, a measurement report to be reported to the first access network device, and does not need to report measurement report information of all measured cells. In this way, air interface resource overheads are reduced.

It should be understood that the information included in the first message may be information about channel quality of any measured cell in the registration area.

In this embodiment of this application, the information about the network slice corresponding to the session to be established by the terminal device and the channel quality of the measured cell may be reported in a same message, thereby reducing system signaling overheads.

In a possible implementation, the at least one measured cell supports the network slice corresponding to the session.

In this embodiment of this application, the measurement report may include only the channel quality of the measured cell that supports the network slice corresponding to the session. This reduces a quantity of measured cells that are measured by the terminal device, reduces a measurement time of the terminal device, and improves measurement efficiency of the terminal device.

In a possible implementation, the method further includes: The first access network device sends a third message to the terminal device, where the third message includes information about a network slice corresponding to a tracking area to which the at least one measured cell belongs.

It should be understood that the third message includes the information about the tracking area to which the at least one measured cell belongs. In this case, the measured cell may be any measured cell inside the registration area.

For example, the third message may be a radio resource control (radio resource control, RRC) message.

In this embodiment of this application, the first access network device may notify, by using the third message, the terminal device of information about a tracking area to which any measured cell belongs, to ensure that the terminal device determines whether a session corresponding to a network slice that is not supported by the first access network device can be established, to be specific, the terminal device determines whether a measured cell supporting the network slice corresponding to the session exists.

According to a second aspect, a communication method is provided. The method includes the features of independent claim 7.

In this embodiment of this application, when determining that the first cell supporting the network slice corresponding to the session exists, the terminal device may send, to the first access network device, the information that is about the network slice corresponding to the to-be-established session and that is determined by the terminal device, so that the first access network device determines the second access network device that supports the network slice corresponding to the session. This implements dual connections to the first access network device and the second access network device, reduces signaling overheads, and improves communication efficiency of a radio access network.

In a possible implementation, that the terminal device determines whether the first cell supporting the network slice corresponding to the session exists includes:
The terminal device determines, based on information about a tracking area to which at least one measured cell belongs and information about a network slice corresponding to the tracking area to which the at least one measured cell belongs, whether the first cell supporting the network slice corresponding to the session exists.

For example, the terminal device determines, based on information about a tracking area to which a first measured cell belongs and information about a network slice corresponding to the tracking area to which the first measured cell belongs, whether the first measured cell includes at least one tracking area that supports the network slice corresponding to the session, to determine whether the first measured cell supports the network slice corresponding to the session.

In a possible implementation, the method further includes: The terminal device obtains a system message, where the system message includes the information about the tracking area to which the at least one measured cell belongs.

The terminal device receives information that is about a network slice corresponding to the at least one tracking area and that is sent by a core network device.

In this embodiment of this application, the system message may carry the information about the tracking area to which the at least one measured cell belongs. The system message is sent by an access network device, and there is a system message for any measured cell. Based on a system message for any measured cell, information about a tracking area in which the measured cell is located may be obtained. The core network device may send, to the terminal device, information about a network slice corresponding to the tracking area.

In a possible implementation, the method further includes: The terminal device receives a third message sent by the first access network device, where the third message includes the information about the tracking area to which the at least one measured cell belongs.

The terminal device receives information that is about a network slice corresponding to the at least one tracking area and that is sent by a core network device.

For example, the third message may be an RRC message sent by the first access network device to the terminal device.

In this embodiment of this application, the third message may carry the information about the tracking area to which the at least one measured cell belongs, and the core network device may send, to the terminal device, the information about the network slice corresponding to the tracking area.

In a possible implementation, the method further includes:
The terminal device receives a second message sent by the first access network device, where the second message includes first indication information, the first indication information is used to indicate the terminal device to report a measurement report on the at least one measured cell, and the measured cell supports the network slice corresponding to the session.

The terminal device sends the measurement report to the first access network device.

In a possible implementation, the method further includes:
The terminal device receives a second message sent by the first access network device, where the second message includes second indication information, the second indication information is used to indicate the terminal device to report a measurement report on the at least one measured cell, and the measured cell belongs to a tracking area that supports the network slice corresponding to the session.

The terminal device sends the measurement report to the first access network device. Optionally, the second message may be a measurement report request message, the first indication information may be identification information of the network slice, and the second indication information may be identification information of the tracking area.

It should be understood that when the terminal device receives the request information for the measurement report, the terminal device may measure channel quality of any measured cell, that is, the measured cell may be any cell. In other words, in this case, the measured cell may be any measured cell in the registration area, or may be any measured cell outside the registration area.

In an example, the second message may include the first indication information, for example, network slice information. Based on the network slice information in the measurement report, when reporting the measurement report to the first access network device, the terminal device may include only measurement report information of a measured cell that supports the network slice, and does not need to report measurement report information of a cell that does not support the network slice. In this way, air interface resource overheads are reduced.

For example, the terminal device receives the second message, and measures channel conditions of a first measured cell, a second measured cell, and a third measured cell, where the first measured cell supports a network slice 2, the second measured cell supports a network slice 3, and the third cell supports a network slice 5. The first indication information includes the identification information of the network slice corresponding to the session, for example, an identifier of the network slice 5. In this case, the terminal device may report only a measurement report for the third cell to the first access network device, and does not need to report measurement reports for the first measured cell and the second measured cell.

In an example, the second message may include the second indication information, for example, information about a tracking area. Based on the information about the tracking area, when reporting the measurement report to the first access network device, the terminal device may include only measurement report information of a measured cell of information, and does not need to report measurement report information of a cell that does not support the network slice information. In this way, air interface resource overheads are reduced.

For example, the terminal device receives the second message, and measures channel conditions of a first measured cell, a second measured cell, and a third measured cell, where a tracking area 1 to which the first measured cell belongs supports a network slice 2, a tracking area 2 to which the second measured cell belongs supports a network slice 3, and a tracking area 3 to which the third measured cell belongs supports a network slice 5. The second indication information includes the identification information of the tracking area, for example, identification information of the tracking area 3, and a network slice corresponding to the tracking area includes the network slice corresponding to the session. In this case, the terminal device may report only a measurement report for the third cell to the first access network device, and does not need to report measurement reports for the first measured cell and the second measured cell.

In this embodiment of this application, the terminal device may select, based on the second message, a measurement report to be reported to the first access network device, and does not need to report measurement report information of all measured cells. In this way, air interface resource overheads are reduced.

It should be understood that the information included in the first message may be information about channel quality of any measured cell in the registration area.

In this embodiment of this application, the information about the network slice corresponding to the session to be established by the terminal device and the channel quality of the measured cell may be reported in a same message, thereby reducing system signaling overheads.

According to a third aspect, an access network device is provided as set out in independent claim 13.

According to a fourth aspect, a terminal device is provided as set out in independent claim 14.

### BRIEF DESCRIPTION OF DRAWINGS

FIG. 1 is a schematic diagram of an application scenario according to an embodiment of this application.
FIG. 2 is a schematic diagram of different network slices supported by different access network devices;
FIG. 3 is a schematic interaction diagram of a communication method according to an embodiment of this application;
FIG. 4 is a schematic interaction diagram of a communication method according to another embodiment of this application;
FIG. 5 is a schematic interaction diagram of a communication method according to still another embodiment of this application;
FIG. 6 is a schematic diagram of an access network device according to an embodiment of this application;
FIG. 7 is a schematic diagram of a terminal device according to an embodiment of this application;
FIG. 8 is a schematic diagram of an access network device according to another example; and
FIG. 9 is a schematic diagram of a terminal device according to another example.

### DESCRIPTION OF EMBODIMENTS

The following describes technical solutions in this application with reference to the accompanying drawings.

The technical solutions in embodiments of this application may be applied to various communications systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD), a universal mobile telecommunications system (universal mobile telecommunication system, UMTS), a worldwide interoperability for microwave access (worldwide interoperability for microwave access, WiMAX) communications system, a future 5th generation (5th generation, 5G) system or a new radio (new radio, NR) system, or a possible further communications system.

A terminal device in the embodiments of this application may also be referred to as user equipment, an access terminal, a subscriber unit, a subscriber station, a mobile station, a mobile console, a remote station, a remote terminal, a mobile device, a user terminal, a terminal, a wireless communications device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in the embodiments of this application.

An access network device in the embodiments of this application may be a device configured to communicate with the terminal device, and the access network device may be a radio access network (radio access network, RAN) device. The RAN device may include various types of base stations. For example, the base stations in the embodiments of this application may include macro base stations, micro base stations, relay stations, access points, and the like in various forms. In systems using different radio access technologies, names of devices that have base station functions may be different. For example, in an LTE network, a device with a base station function is referred to as an evolved NodeB (evolved NodeB, eNB or eNodeB). In a 3rd generation (3rd generation, 3G) network, a device with a base station function is referred to as a Node B (Node B). In a 5th generation (5th generation, 5G) network, a device with a base station function is referred to as a gNodeB (g Node B, gNB) or the like. This is not limited in the embodiments of this application.

A core network (core network, CN) device in the embodiments of this application may be a control plane anchor of the terminal device, and provides functions such as registration area (registration area) update for the terminal. For example, the core network device may include an access and mobility management function (access and mobility management function, AMF) entity. The core network device may be a network device configured to provide functions such as core access (core access) and mobility management for the terminal. A specific function of the core network device may be similar to a function of a mobility management entity (mobility management entity, MME) in an LTE system.

For ease of understanding, before the communication method, the access network device, and the terminal device in this application are described, the following describes related terms and principles used in the embodiments of this application.

Network slice (network slice): Network slices are logical networks having different network capabilities and network features that are customized on physical or virtual network infrastructure according to different service requirements, tenants, or the like. A network slice may be a complete end-to-end network including a terminal device, an access network, a transport network, a core network, and an application server, can provide a telecommunications service, and has a specific network capability. Alternatively, the network slice may be any combination of the terminal device, the access network, the transport network, the core network, and the application server. For example, the network slice includes only the access network and the core network. The network slice may have one or more of the following features: The access network may support the network slice, or may not support the network slice; the access network may be shared by a plurality of network slices; and features of different network slices and network function modules separately included in the different network slices may be different.

A network slice identifier may include but is not limited to at least one of the following: network slice type information, service type information, tenant (Tenant) information, user group information, slice group information, network slice instance information, a dedicated core network (dedicated core network, DCN) identifier, single network slice selection assistance information (single network slice selection assistance information, S-NSSAI), S-NSSAI group information, a temporary identifier (Temporary ID), and R-NSSAI (RAN-NSSAI).

Specific definitions of the foregoing terms are as follows:
Network slice type information. For example, the network slice type information may be used to indicate network slice types such as an enhanced mobile broadband (enhanced mobile broadband, eMBB) service, ultra-reliable low-latency communications (ultra-reliable low latency communications, URLLC), and massive machine-type communications (massive machine type communication, mMTC). Optionally, the network slice type information may alternatively indicate an end-to-end network slice type, including a RAN-to-CN network slice type, or may indicate a RAN-side network slice type, or a CN-side network slice type.

Service type information: Identification information related to a specific service. For example, the service type information may indicate a service feature or specific service information of a service such as a video service, an internet of vehicles service, or a voice service.

Tenant information: The tenant information is used to indicate information about a customer that creates or rents the network slice, for example, Tencent or the State Grid Corporation of China.

User group information: The user group information is used to indicate information about a group of users who are grouped based on a specific feature such as a user level.

Slice group information: The slice group information is used to indicate information about a slice group grouped based on a specific feature. For example, all network slices that can be accessed by the terminal device may be classified as one slice group, or network slices may be grouped based on another standard.

Network slice instance information: The network slice instance information is used to indicate an identifier and feature information of an instance created for the network slice. For example, an identifier may be allocated to a network slice instance, to indicate the network slice instance. Alternatively, a new identifier may be mapped based on the network slice instance identifier, the new identifier is associated with the network slice instance, and a receiver may identify, based on the identifier, the specific network slice instance indicated by the identifier.

Dedicated core network identifier: The identifier is used to uniquely indicate a dedicated core network in an LTE, an eLTE, or a 5G system, for example, a dedicated core network of the internet of things. Optionally, mapping may be performed between the dedicated core network identifier and the network slice identifier, the network slice identifier may be obtained by mapping the dedicated core network identifier, and the dedicated core network identifier may also be obtained by mapping the network slice identifier.

Network slice selection assistance information (network slice selection assistance information, NSSAI): The NSSAI is a value defined in a standard or a private value defined in the PLMN. One piece of NSSAI includes a plurality of pieces of SM-NSSAI, and each piece of SM-NSSAI may correspond to one specific slice. The RAN routes an initial access request message to the AMF through the NSSAI.

Single network slice selection assistance information (single-nssai, S-NSSAI): The S-NSSAI may include two values: a slice/service type and a network slice differentiator, or may include only a slice/service type.

Slice/Service type (slice/service type, SST): The SST is used to indicate a feature and a service that are expected to be provided by a network.

Slice differentiator (slice differentiator, SD): The SD is used as supplement information for the slice/service type during selection of a network slice instance. When the slice/service type points to a plurality of network slice instances, the slice differentiator may be further used to distinguish these network slice instances.

S-NSSAI: The S-NSSAI may include at least slice/service type (slice/service type, SST) information, and optionally, may further include slice differentiator (slice differentiator, SD) information. The SST information, such as a feature and a service type of a network slice, is used to indicate behavior of the network slice. The SD information is supplement information of the SST information. If the SST points to a plurality of network slice instances, the SD information may correspond to one unique network slice instance.

S-NSSAI group information: The S-NSSAI group information is identification information used to indicate grouping of S-NSSAI based on a specific feature. For example, all network slices of a common core network device that can be accessed by the terminal device may be used as an S-NSSAI group.

Temporary identifier: The temporary identifier is assigned by the core network device to a terminal that is already registered on a CN side, and the temporary identifier may uniquely point to a specific core network device.

R-NSSAI (RAN-NSSAI): The R-NSSAI indicates a group of specific pieces of S-NSSAI, namely, an identifier of a set of a group of specific pieces of S-NSSAI.

Tracking area (tracking area, TA): The TA includes one or more cells. If a plurality of cells are included, the plurality of cells may belong to one base station, or may belong to a plurality of base stations.

Registration area (registration area, RA): The RA includes one or more TAs. If a terminal is out of a coverage area of the RA, the terminal triggers a registration area update process.

Master node (master node, MN): In a dual-connectivity scenario, a control plane interface (NG-C) is established between the master node and a core network. In the embodiments of this application, the master node may alternatively be a macro base station.

Secondary node (secondary node, SN): In a dual-connectivity scenario, the secondary node provides a radio resource other than a primary node for a terminal. In the embodiments of this application, the secondary node may alternatively be a micro base station.

Allowed NSSAI (allowed NSSAI): The allowed NSSAI is network slice identification information assigned by a core network to a terminal when a registration area is updated or the terminal performs initial access, and is used to indicate a service that can be initiated by the terminal in a current registration area. That is, a network slice to which a session that can be initiated belongs can only be in the allowed NSSAI.

It should be understood that, in the embodiments of this application, a network slice may use at least one of the foregoing parameters to represent network slice indication information of the network slice. For example, the network slice indication information of the network slice may be represented by using a network slice type, by using a network slice type and a service type, or by using a service type and tenant information. This is not limited in the embodiments of this application. How to represent the network slice indication information of the network slice is not described in detail below.

Optionally, a specific encoding form of the network slice indication information of the network slice is not limited. Different fields, of an interface message that can be carried between different devices, may separately represent different network slice indication information. Alternatively, abstracted index values may be used for replacement, and different index values separately correspond to different network slices. Certainly, in addition to the foregoing identifiers, another identifier may alternatively be used. This is not limited herein.

It should be understood that if the terminal device/access network device/core network device supports a plurality of network slices, information about the network slices supported by the terminal device/access network device/core network device may be represented in a form of listing at least one of the foregoing identifiers.

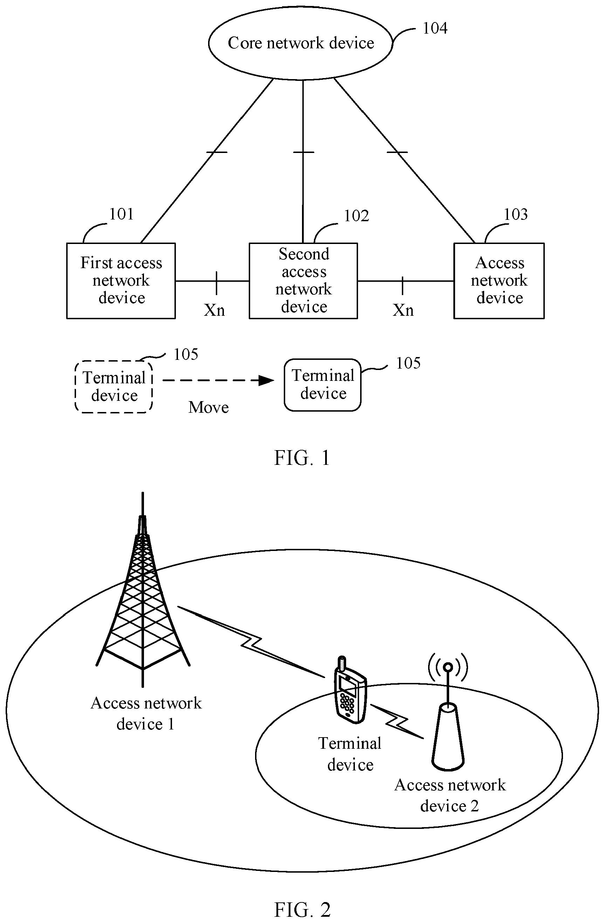

An application environment of the embodiments of this application is first briefly described below with reference to FIG. 1. As shown in FIG. 1, the application environment includes an access network device (for example, a first access network device 101, a second access network device 102, and an access network device 103), a core network device 104, and a terminal device 105. The access network device may be connected to at least one terminal device. The first access network device 101 may be a macro base station, and the second access network device 102 may be a micro base station. The access network devices may be connected to at least one core network device. For example, the access network devices (for example, the macro base station 101, the micro base station 102, and the eNB 103) are all connected to the core network device 104.

There is an interface, for example, an NG interface, between the core network device and the access network device. Through the interface, the core network device and the access network device may communicate with each other. There may not be a communications interface between access network devices. If there is a communications interface, for example, an Xn interface, between the macro base station 101 and the micro base station 102, the macro base station 101 and the micro base station 102 may communicate with each other. If there is no communications interface between the macro base station 101 and the micro base station 102, the macro base station 101 and the micro base station 102 cannot communicate with each other. Therefore, the macro base station 101 and the micro base station 102 can transmit, only when there is a communications interface, information about network slices separately supported by the access network device 101 and the access network device 102. When there is no communications interface, the access network device 101 and the access network device 102 cannot communicate with each other, and cannot send the information about the network slices separately supported by the access network device 101 and the access network device 102. In this case, the access network devices may interact with each other by using the core network device as a relay.

Because of network slice deployment, network slices supported by different access network devices are different. For example, the macro base station 101 may support network slices 1, 2, and 3, and the micro base station may support network slices 3, 4, and 5. Different network slices may correspond to different sessions initiated by a terminal device. For example, the terminal device 105 is used as an example. Three sessions currently established by the macro base station 101 for the terminal device 105 are a session 1, a session 2, and a session 3. The session 1 corresponds to the network slice 1, the session 2 corresponds to the network slice 2, and the session 3 corresponds to the network slice 3.

It should be noted that the session may be a packet data unit (packet data unit, PDU) session or an internet protocol (internet protocol, IP) session. The PDU session may be a connection established between the terminal device and a data network, and the connection between the terminal device and the data network may be an internet protocol (internet protocol, IP)-based connection, an ethernet-based connection, or another type of connection. In the embodiments of this application, a method or an apparatus in this application is described by using an example in which the session is a PDU session.

It should be noted that the application environment in FIG. 1 is merely an architectural diagram for reference, and may change at any time in future technology evolution. A person skilled in the art can understand that a communication method in the embodiments of this application may also be applicable to another similar communications architecture.

From a perspective of a system, a network slice that can be supported by the access network device is at a granularity of a TA. To be specific, if different cells of different base stations or different cells of a same base station belong to a same TA, network slices supported by these cells are the same. If these cells belong to different TAs, network slices supported by these cells may be the same or may be different.

From a perspective of the terminal device, a network slice that can be supported by the terminal device is at a granularity of an RA. That is, network slices supported by the terminal device are the same in all cells of a current RA.

For example, as shown in FIG. 2, it is assumed that the terminal device supports the network slices 1, 2, 3, 4, and 5; the access network device 1 (the macro base station) belongs to a TA 1, and may support the network slices 1, 2, and 3; the access network device 2 (the micro base station) belongs to a TA 2, and may support the network slices 3, 4, and 5. If the terminal initiates a registration process or an RA update process to the access network device 1, there are two options when the core network device assigns an RA to the terminal. In a first possible implementation, the RA includes both the TA 1 and the TA 2. In a second possible implementation, the RA includes only the TA 1.

In the first possible implementation, when the RA includes both the TA 1 and the TA 2, it is specified in the standard that network slices supported in the RA are the same. That is, when the RA includes both the TA 1 and the TA 2, an allowed network slice is a network slice that can be supported by both the TA 1 and the TA 2. In other words, a network slice that can be used by the terminal device to initiate a PDU session in the current registration area includes only the network slice 3.

In the foregoing first possible implementation, a range of the RA is relatively large, and the RA update procedure is simplified, reducing system signaling overheads. However, because the network slice that can be used to initiate a PDU session in the current registration area includes only the network slice 3, a relatively small quantity of network slices can be used to initiate a PDU session.

In the second possible implementation, when the RA includes only the TA 1, there are more network slices that can be used to initiate a PDU session in the registration area than those in the first possible implementation. However, because the RA includes only the TA 1, a range of the RA is relatively small. As a result, frequent RA update procedures may be caused. This increases system signaling overheads.

In this scenario, how the terminal device initiates a PDU session based on a network slice supported in the RA while reducing relatively high signaling overheads caused by RA update in a system is a problem that needs to be studied.

In view of this, the embodiments of this application provide a communication method, so that a terminal device can receive services of different network slices from a first access network device and a second access network device through dual connections. For example, the first access network device may be a master access network device (for example, a macro base station) that has currently established a connection to the terminal device, and the second access network device may be a secondary access network device (for example, a micro base station) that is determined by using the master access network device and that is connected to the terminal device. For example, the terminal device initiates a session (supported by both the macro base station and the micro base station) of a network slice 1 in the macro base station, and the terminal device initiates a session (supported by the micro base station but not supported by the macro base station) of a network slice 2 in the micro base station. According to the communication method in this application, the terminal device is supported in initiating sessions of different network slices, so that the terminal device receives services of different network slices without causing frequent RA update procedures.

To implement the dual connectivity solution in this application, the following may be considered:

First, the first access network device needs to determine the second access network device. To be specific, when the first access network does not support a network slice corresponding to a session to be established by the terminal device, the first access network device needs to determine the second access network device that supports the network slice corresponding to the session to be established by the terminal device.

Second, the terminal device needs to determine whether a session corresponding to a network slice that is not supported by the first access network device can be initiated. That is, the terminal device determines whether an access network device that supports a network slice corresponding to the session exists.

For example, the terminal device may determine whether a measured cell supporting the network slice corresponding to the session exists, and the terminal device may determine, by using identification information of the measured cell, an access network device supporting the network slice corresponding to the session.

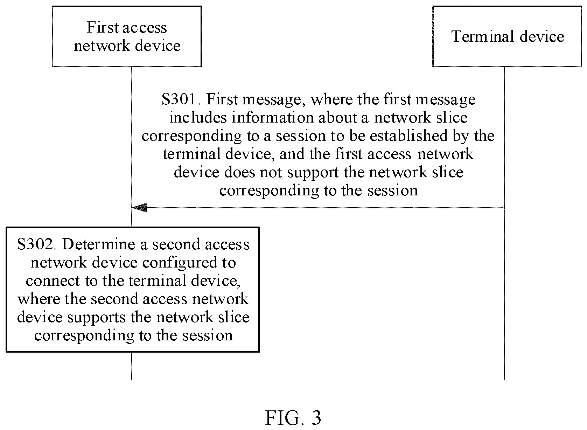

FIG. 3 is a schematic flowchart of a communication method according to an embodiment of this application. The method in FIG. 3 may be applied to the network architecture in FIG. 1. A first access network device does not support a network slice corresponding to a session to be established by a terminal device. The method in FIG. 3 includes the following steps.

S301. The first access network device receives a first message sent by the terminal device, where the first message includes information about the network slice corresponding to the session to be established by the terminal device, and the information about the network slice may be included in a NAS message, that is, a NAS container (container), or may be directly included in an RRC message.

The first message further includes information about channel quality of at least one measured cell. To be specific, the first message may include a measurement report, and the measurement report includes the information about the channel quality of the at least one measured cell that is measured by the terminal device, or the measurement report includes identification information of a measured cell. If the measurement report includes only the identification information of the cell, the first access network device considers that the cell corresponding to the identification information of the cell can be used as a serving cell of the terminal device.

It should be noted that the at least one measured cell may be any measured cell other than the current serving cell, and a measured cell included in the measurement report may be a cell covered by an access network device adjacent to the first access network device, or may be another cell covered by the first access network device. The terminal device may determine, based on the measurement report, a measured cell, for example, a first measured cell, as a serving cell of the terminal device, and the first measured cell may be a measured cell in a coverage area of a second access network device. In this embodiment of this application, the information about the network slice corresponding to the session to be established by the terminal device and the channel quality of the measured cell may be reported in a same message, thereby reducing system signaling overheads.

It should be noted that, in this embodiment of this application, the measured cell may be a cell covered by the first access network range, or may not be a cell covered by the first access network device. The measured cell may be a cell that is actively measured by the terminal device, that is, the terminal device may measure a channel condition of any cell. The first access network device is an access network device of a cell that serves the current terminal device, the second access network device is a neighboring access network device of the first access network device, and the neighboring device may be geographically neighboring or close to the first access network device.

Optionally, the first access network device sends, to the terminal device, information used to indicate an occasion in which the terminal device sends the measurement report.

In an example, the information about the occasion for sending the measurement report may be information included in a message separately sent by the first access network device to the terminal device.

In an example, the information about the occasion for sending the measurement report may also be carried in another message sent by the first access network device to the terminal device. For example, a third message sent by the first access network device to the terminal device may include the information about the occasion for sending the measurement report.

For example, the terminal device sends the first message to the first access network device. Before the terminal device sends the first message to the first access network device, the first access network device may add, for the terminal device, the information about the occasion for sending the measurement report, that is, the information may be considered as an occasion condition for reporting the measurement report. The first access network device triggers measurement report reporting when the first access network device expects the terminal device to establish a session in the measured cell. Alternatively, the first access network device triggers measurement report reporting when the terminal needs to initiate session establishment, and the first access network device does not support a network slice corresponding to a session that needs to be established.

In this embodiment of this application, the first access network device may add a measurement report reporting condition for the measurement report of the terminal device, to reduce a quantity of reported measurement reports, thereby reducing unnecessary air interface overheads.

It should be noted that the first message may alternatively not include the measurement report. The terminal device sends the measurement report to the first access network device when receiving a measurement report request sent by the first access network device.

Optionally, the first access network device sends a second message to the terminal device, where the second message includes first indication information or second indication information. The first indication information is used to indicate the terminal device to report a measurement report on at least one measured cell that supports the network slice corresponding to the session. The second indication information is used to indicate the terminal device to report a measurement report on at least one measured cell belonging to a tracking area that supports the network slice corresponding to the session.

The first access network device receives the measurement report sent by the terminal device.

For example, the second message may be a measurement report request message, the first indication information may be identification information of the network slice, and the second indication information may be identification information of the tracking area. For example, the identification information of the network slice may be a network slice identifier corresponding to the session that needs to be established. That is, the terminal device reports the measurement report on the at least one measured cell belonging to the tracking area that supports the network slice corresponding to the session. In another example, the identification information of the network slice may be another network slice identifier (a second network slice identifier) other than a network slice identifier corresponding to the session that needs to be established, and the session may be established based on the second network slice identifier.

Optionally, the second message may include network slice information. For example, the network slice information is the network slice corresponding to the session to be established by the terminal device.

In this embodiment of this application, the measurement report may include only the channel quality of the measured cell that supports the network slice corresponding to the session, so that a quantity of measured cells in the measurement report reported by the terminal device to the first access network device is reduced, and air interface resource overheads are reduced.

Optionally, before the terminal device sends the first message to the first access network device, the terminal device determines whether a first cell that supports the network slice corresponding to the session exists, where the terminal device is located in a coverage area of the first cell.

For example, the terminal device may determine, based on information about the tracking area in which the at least one measured cell is located and information about a network slice supported by at least one tracking area, whether the first cell that supports the network slice corresponding to the session to be established by the terminal device exists.

In an example, the terminal device obtains a broadcast system message in the measured cell, for example, obtains a system message broadcast by the first measured cell, and includes, in the broadcast system message, information about a tracking area in which the first measured cell is located. In addition, the terminal device may receive a NAS message sent by a core network device, and the NAS message may include the information about the network slice corresponding to the at least one tracking area. The terminal device may determine, based on the broadcast system message and the NAS message sent by the core network device, whether the first measured cell supports the network slice corresponding to the session to be established by the terminal device. If the first measured cell supports the network slice corresponding to the session to be established by the terminal device, the measurement report may include channel quality of the first measured cell.

In another example, the terminal device receives the third message sent by the first access network device, where the third message includes the information about the tracking area to which the at least one measured cell belongs. For example, the first access network device sends an RRC message, and the RRC message includes the information about the tracking area in which the first measured cell is located. In addition, the terminal device may receive a NAS message sent by a core network device, and the NAS message may include the information about the network slice corresponding to the at least one tracking area. The terminal device may determine, based on the RRC message and the NAS message sent by the core network device, whether the first measured cell supports the network slice corresponding to the session to be established by the terminal device. If the first measured cell supports the network slice corresponding to the session to be established by the terminal device, the measurement report may include channel quality of the first measured cell.

In another example, the core network device sends a fourth message to the first access network device, where the fourth message may include information about a network slice corresponding to at least one tracking area included in a registration area of the terminal device. For example, the fourth message may be an NGAP message. The core network device notifies the first access network device of registration area information of the terminal device by using the NGAP message, or notifies the first access network device of the information about the corresponding network slice of the terminal device at a granularity of a tracking area/base station/cell. The first access network device sends the third message to the terminal device. For example, the third message may be an RRC message. The first access network device sends the RRC message to the terminal device. The RRC message includes information about a tracking area to which the first measured cell belongs and the information about the network slice corresponding to the at least one tracking area. The terminal device may determine, based on the third message, whether the first measured cell supports the network slice corresponding to the session to be established by the terminal device. If the first measured cell supports the network slice corresponding to the session to be established by the terminal device, the measurement report may include channel quality of the first measured cell.

S302. The first access network device determines the second access network device, where the second access network device supports the network slice corresponding to the session to be established by the terminal device.

Optionally, the first access network device may determine the second access network device based on the information that is about the network slice corresponding to the session to be established by the terminal device and that is included in the first message and information about a network slice supported by at least one access network device. It should be understood that there is an interface that can be used for communication between the first access network device and another access network device. Therefore, the first access network device may obtain the information about the network slice supported by the at least one access network device.

In this embodiment of this application, there may be a communications interface between the first access network device and the at least one access network device. The first access network device may communicate with the at least one access network device to obtain the information about the network slice corresponding to the at least one access network device, and determine the second access network device that supports the network slice corresponding to the session. This ensures that when a registration area is not updated, there are more network slices that can be used to initiate a session, and improves communication efficiency of the radio access network.

Optionally, the first access network device may determine the second access network device based on the information that is about the network slice corresponding to the session to be established by the terminal device and that is included in the first message, the information about the network slice supported by the at least one access network device, and the information that is about the channel quality of the at least one measured cell and that is included in the measurement report.

In this embodiment of this application, there may be a communications interface between the first access network device and the at least one access network device. The first access network device may communicate with the at least one access network device to obtain the information about the network slice corresponding to the at least one access network device, further determine, based on the information about the channel quality of the at least one measured cell in the measurement report sent by the terminal device, a measured cell that supports the network slice corresponding to the session and whose channel quality is relatively good, and determine the second access network device based on an identifier of the determined measured cell. This ensures that when a registration area is not updated, there are more network slices that can be used to initiate a session, and improves communication efficiency of a radio access network.

It should be noted that after determining the second access network device, the first access network device may send a second access network device addition request message to the core network device, so that the terminal device implements dual connections to both the first access network device and the second access network device, and establishes, via the second access network device, a session corresponding to a network slice that is not supported by the first access network device and that is to be established by the terminal device.

In an example, the first message sent by the terminal device to the first access network device may not include the measurement report. When the terminal device receives the second message sent by the first access network device, for example, the second message may be an RRC message sent by the first access network device to the terminal device, the RRC message carries measurement request information sent by the first access network device to the terminal device. The terminal device may measure the channel quality of the measured cell after receiving the measurement request information sent by the first access network device.

It should be noted that names of the messages are not limited in this embodiment of this application. The names of the messages are merely used as examples. Alternatively, the messages may have other names provided that same functions are implemented by using the messages.

In this embodiment of this application, the first access network device and the second access network device support different network slices. The first access network device establishes a session corresponding to a network slice supported by both the first access network device and the second access network device. The first access network device determines the second access network device, and establishes, via the second access network device, a session corresponding to a network slice that is not supported by the first access network device. In this way, dual connections between the terminal device and the first access network device and between the terminal device and the second access network device are implemented. This ensures that when a registration area is not updated, there are more network slices that can be used to initiate a session, and improves communication efficiency of a radio access network.

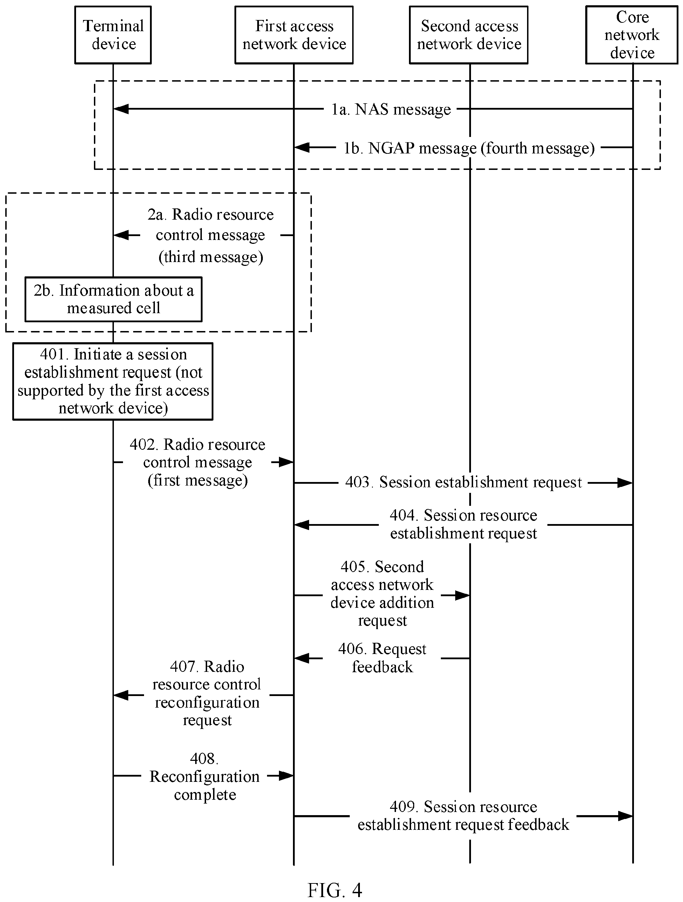

FIG. 4 is a schematic flowchart of a communication method according to an embodiment of this application. The method in FIG. 4 may be applied to the network architecture in FIG. 1. As shown in FIG. 4, a first access network device does not support a network slice corresponding to a session of a terminal device, or does not support a feature of a network slice, and a second access network device supports the feature of the network slice. Steps in FIG. 4 are described in detail below.

In FIG. 4, the first access network device may be understood as a master access network device (for example, a macro base station), namely, an access network device currently connected to the terminal device, and the second access network device may be understood as a secondary access network device (for example, a micro base station), namely, another access network device to which the terminal device needs to establish dual connections.

It should be noted that a measured cell in the embodiment shown in FIG. 4 may be in a range of a registration area allocated by a core network device, that is, the measured cell may be any cell in the registration area.

First, the terminal device obtains information about a network slice supported in the registration area.

For example, the information that is about the network slice supported in the registration area and that is obtained by the terminal device from the core network device may be information about a network slice that corresponds to a tracking area in the registration area and that can be used to initiate a PDU session, information about a network slice that corresponds to a cell in the registration area and that can be used to initiate a PDU session, or information about a network slice that corresponds to an access network device in the registration area and that can be used to initiate a PDU session.

It should be understood that, in the current technology, information about a network slice supported in a registration area is information about a network slice corresponding to the registration area. That is, an allowed network slice is allocated at a granularity of a registration area. In this embodiment of this application, the information about the network slice supported in the registration area may be information about a network slice corresponding to a tracking area in the registration area, information about a network slice corresponding to a cell in the registration area, or information about a network slice corresponding to a base station in the registration area.

For example, the information about the network slice supported in the registration area may be the information about the network slice corresponding to the tracking area in the registration area. The terminal device may obtain the information about the network slice in a form shown in Table 1 or Table 2.

**Table 1**

| Information element/Group name |
|---|
| Public land mobile network |
| >Allowed network slice list |
| >>Allowed network slice item |
| >>>Tracking area code |
| >>>Single network slice selection assistance information (list) |

**Table 2**

| Information element/Group name |
|---|
| Allowed network slice list |
| >Allowed network slice item |
| >>Tracking area code |
| >>Single network slice selection assistance information (list) |

The terminal device obtains the information about the network slice in the registration area in at least the following two manners:
1a. The core network device (for example, an AMF) sends a non-access stratum (non-access stratum, NAS) message to the terminal device, where the NAS message may be forwarded by the first access network device, and the message includes the information about the network slice in the registration area, for example, may include the information about the network slice that corresponds to the tracking area in the registration area and that can be used to initiate a PDU session.

It should be understood that before sending the NAS message to the terminal device, the core network device has obtained the information about the network slice in the registration area.

1b. The core network device sends a notification message to the first access network device, where the notification message may be an NG application protocol (ng application protocol, NGAP) message, and the NGAP message includes the information about the network slice in the registration area. After receiving the information about the network slice in the registration area, the first access network device may store the information.

Optionally, the first access network device sends a third message, for example, an RRC message, to the terminal device, where the RRC message carries indication information, and the indication information indicates information about a network slice of the terminal device in the registration area.

For example, the terminal device may obtain the information about the network slice in the registration area based on the third message.

The terminal device obtains information about the measured cell in at least the following two manners:
2a. The terminal device receives the third message sent by the first access network device, and the terminal device may obtain information about a TA of the measured cell based on the third message, for example, an RRC message.

It should be understood that the measured cell herein may be different from a cell in which the terminal device is currently located.

Optionally, the RRC message may be triggered by using a measurement report, to reduce unnecessary air interface overheads. For example, when the first access network device needs to obtain a network slice supported by a TA to which the terminal device belongs, the first access network device determines whether to trigger the RRC message; or when the first access network device needs to obtain information about an RA to which the terminal device belongs, the first access network device triggers the RRC message.

Optionally, the first access network device may directly notify, by using the RRC message, the terminal device of the information about the TA of the measured cell and the information about the network slice supported by the TA.

2b. The terminal device may obtain a system message broadcast by the measured cell, to obtain the information about the measured cell.

For example, the terminal device obtains system information 1 (system information block, SIB) or a master information block (master information block, MIB) of the measured cell, to determine that the measured cell supports the network slice corresponding to the PDU session. The SIB1 information mainly carries at least one of the following: information related to cell access and cell selection, an LTE-TDD subframe configuration, scheduling and window information of another SIB block, and the like. The MIB information includes a limited quantity of most important and most commonly used transmission parameters (system bandwidths, system frame numbers, and configuration information) that are used to read information about another cell.

For example, the terminal device obtains, from the SIB1 or the MIB message of the measured cell, the information about the TA to which the measured cell belongs, and then determines, based on the information about the TA of the measured cell and a correspondence that is between a TA and a supported network slice and that is obtained in step 401, whether the network slice corresponding to the to-be-established session is supported in the measured cell.

For example, it is assumed that the terminal device receives information sent by the core network device, and the information may indicate information about a tracking area included in the registration area. For example, the registration area RA includes a TA 1, a TA 2, and a TA 3. The TA 1 supports network slices 2 and 3. The TA 2 supports network slices 4 and 5. The TA 3 supports network slices 1 and 6. The terminal device learns, by obtaining the system message of the measured cell, that a measured cell 1 belongs to the TA 1. In this case, the network slice corresponding to the PDU session that the terminal device requests to establish is the network slice 4. Therefore, the terminal device determines that the measured cell 1 does not support the network slice 4, which means that the measured cell 1 does not support the PDU session that the terminal device requests to establish.

Based on the foregoing steps, for example, the terminal device may determine that the first access network device does not support a first network slice to which the PDU session requested to be established belongs, but there is a measured cell that supports the first network slice. In other words, there is an access network device that supports the first network slice, and the terminal device may initiate a PDU session corresponding to the first network slice.

It should be noted that a correspondence between a PDU session and a network slice may be that one PDU session corresponds to one network slice, or one PDU session corresponds to a plurality of network slices (that is, more than one network slice). For example, a PDU#1 session corresponds to a network slice #1, a network slice #2, and a network slice #3, and the PDU#1 session is preferentially established in the network slice #1 (the network slice #1 has a highest priority), followed by the network slice #2 and the network slice #3. In this embodiment of this application, it may be understood that the PDU session belongs to a specific network slice, or the PDU session is established on a network slice corresponding to the PDU session, or a network side (for example, a core network or an access network) allocates, to the PDU session, a resource of a network slice corresponding to the PDU session.

401. The terminal device initiates a session establishment request, and the requested PDU session is not supported by the first access network device.

Optionally, that the first access network device does not support the PDU session initiated by the terminal device may be: The terminal device reports, to the first access network device, a PDU session corresponding to a network slice supported by the terminal device, so that the first access network device determines that the first access network device does not support the requested PDU session initiated by the terminal device. Alternatively, the terminal device may obtain information about a network slice supported by the first access network device, and the terminal device determines, based on information about a network slice supported by the terminal device and the obtained information about the network slice supported by the first access network device, information about a network slice not supported by the first access network device, and further, determines, based on information about the network slice corresponding to the initiated PDU session, that the first access network device does not support the requested PDU session.

S402. The terminal device sends a first message to the first access network device.

For example, the first message may be an RRC message.

In this embodiment of this application, the first access network device receives the RRC message sent by the terminal device. The message includes the PDU session establishment request, and the message further includes information about a network slice to which the requested PDU session belongs. The first access network device determines, by using the RRC message, the information about the network slice to which the PDU session requested to be established belongs. Because there is an interface, for communication, between the first access network device and the second access network device, the first access network device can obtain information about a network slice supported by the second access network device. That is, the first access network device can determine whether the second access network device supports the PDU session initiated by the terminal device.

For example, the RRC message sent by the terminal device to the first access network device includes indication information, where the indication information indicates that the network slice to which the PDU session requested to be established belongs is the network slice 4. The first access network device supports the network slices 1, 2, and 3. This means that the first access network device does not support the PDU session initiated by the terminal device. The first access network device may determine the second access network device based on the indication information and a correspondence for a network slice. The correspondence for the network slice may be considered as information about a network slice corresponding to at least one access network device. For example, a base station 1 supports network slices 1 and 2, a base station 2 supports network slices 2 and 3, and a base station 3 supports network slices 4 and 5. In this way, the first access network device determines that the base station 3 may be the second access network device.

If the first access network device determines that there is a second access network device supporting the PDU session that the terminal device requests to establish, the first access network device sends the establishment request for establishing the PDU session to the core network device. If the first access network device determines that there is no second access network device supporting the PDU session that the terminal device requests to establish, the first access network device does not send, to the core network device, the establishment request for establishing the PDU session.

Optionally, a message carried in the RRC message may be in any one of the following forms:

**Table 3**

| Information element/Group name |
|---|
| PDU session identifier |
| Single network slice selection assistance information |

**Table 4**

| Information element/Group name |
|---|
| Single network slice selection assistance information |

**Table 5**

| Information element/Group name |
|---|
| PDU session request list |
| >PDU session request item |
| >>PDU session identifier |
| >>Single network slice selection assistance information |

**Table 6**

| Information element/Group name |
|---|
| PDU session request list |
| >Single network slice selection assistance information |

Optionally, the RRC message may further include information about a measurement report, and the measurement report includes a channel condition of a measured cell.

For example, the first access network device determines, based on the information about the measurement report, whether a measured cell for which a channel condition is satisfied and that supports the network slice corresponding to the PDU session requested by the terminal device exists, and may determine the second access network device based on identification information of the determined measured cell.

Optionally, to further reduce a quantity of measurement reports (for example, a quantity of reported cells), before step 402, the first access network device sends, to the terminal device, information used to indicate an occasion for sending a measurement report.

In an example, the information about the occasion for sending the measurement report may be information included in a message separately sent by the first access network device to the terminal device.

In an example, the information about the occasion for sending the measurement report may also be carried in another message sent by the first access network device to the terminal device. For example, a third message sent by the first access network device to the terminal device may include the information about the occasion for sending the measurement report.

For example, the first access network device may add a new measurement reporting trigger condition to a measurement report of the terminal device. The first access network device sends, to the terminal device, the information about the occasion for sending the measurement report, where the information for reporting the measurement report is used to indicate a sending occasion of the measurement report.

For example, measurement report reporting is triggered when the first access network device does not support the network slice to which the PDU session belongs, that is, when a measured cell (a neighboring base station) needs to establish the PDU session, and the carried measurement report may include only channel quality of the measured cell that supports the network slice corresponding to the PDU session.

403. The first access network device sends the PDU session establishment request to the core network device.

It should be noted that, before the first access network device sends the PDU session establishment request to the core network device, the first access network device has determined that there is an appropriate second access network device that serves the terminal device. In other words, the first access network device has determined that there is a second access network device that supports the PDU session that the terminal device requests to establish. To be specific, the first access network device has determined that there is a second access network device that supports the network slice to which the PDU session that the terminal device requests to establish belongs.

404. The core network device sends a PDU session resource establishment request to the first access network device.

After receiving the PDU session establishment request sent by the first access network device, the core network device sends the PDU session resource establishment request to the first access network device, where a requested resource is used to establish the PDU session.

It should be understood that, in the foregoing steps, the terminal device accesses the first access network device, and establishes a communication connection to the first access network device.

405. The first access network device sends an addition request to the second access network device.

The first access network device does not support the network slice corresponding to the PDU session that the terminal device requests to establish, the first access network device determines that there is a second access network device that supports the network slice corresponding to the PDU session that the terminal device requests to establish, and the first access network device sends the addition request to the second access network device, where the request is used to indicate the second access network device to establish the PDU session requested by the terminal device.

For example, it is assumed that the first access network device and the second access network device may interact with each other by using an Xn interface. A correspondence between a network slice and a PDU session may be transferred as an Xn application protocol (xn application protocol, XnAP) message.

406. The second access network device sends an addition request feedback to the first access network device.

For example, the addition request feedback of the second access network device may be used to indicate whether the second access network device allows the terminal device to access and to establish the PDU session.

407. The first access network device sends a reconfiguration request message to the terminal device.

For example, the reconfiguration request message sent by the first access network device to the terminal device may be an RRC reconfiguration request message, and is used to indicate that the terminal device can further access the second access network device, and the second access network device supports the PDU session that the terminal device requests to establish. In other words, the second access network device supports the network slice to which the PDU session requested to be established belongs, and the terminal device can establish the PDU session via the second access network device without initiating a registration area update.

It should be understood that, when the first access network device sends the reconfiguration request message to the terminal device, it means that the PDU session that the terminal device requests to establish is successfully established.

408. The terminal device sends a reconfiguration complete message to the first access network device.

409. The first access network device sends a PDU session resource establishment request feedback to the core network device.

It should be noted that, in this embodiment of this application, the RRC message may be an RRC reconfiguration message, a measurement request message, an RRC connection reconfiguration message, an RRC setup message, a terminal device capability request message, a terminal device information request message, or a measurement configuration message. This is not limited in the embodiments of this application.

It should be understood that, in this embodiment of this application, the correspondence between a session of the terminal device and a network slice is used as an example for description, but the correspondence is not limited thereto. For example, the correspondence may alternatively be a correspondence between a bearer and a network slice, or a correspondence between a data flow (for example, a QoS flow or an IP flow) and a network slice.

In this embodiment of this application, the first access network device obtains the information about the network slice to which the PDU session that the terminal device requests to establish belongs (where the first access network device does not support the network slice) and the information about the network slice corresponding to the at least one access network device, to determine the second access network device. In this way, the terminal device accesses the second access network device to establish the PDU session, to implement dual connections between the terminal device and the first access network device and between the terminal device and the second access network device, thereby ensuring that there are more network slices that can be used to initiate a session when the registration area is not updated, and improving communication efficiency of a radio access network.

It should be understood that sequence numbers of the foregoing processes do not indicate an execution sequence. The execution sequence of the processes should be determined based on functions and internal logic of the processes, and should not be construed as any limitation on an implementation process of this embodiment of this application.

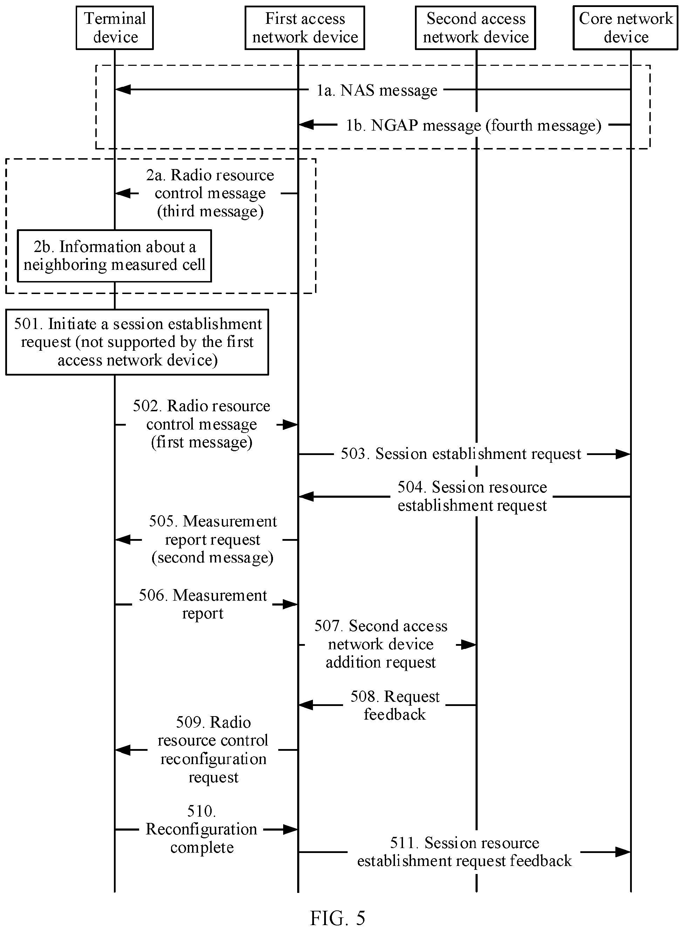

FIG. 5 is a schematic diagram of a communication method according to another embodiment of this application. The first message (for example, an RRC message) sent by the terminal device to the first access network device in FIG. 4 may include a measurement report. In the communication method in FIG. 5, a first message may not include a measurement report. After a terminal device receives a measurement report request sent by a first access network device, the terminal device sends the measurement report to the first access network device. The method in FIG. 5 may be applied to the network architecture in FIG. 1. As shown in FIG. 5, steps in FIG. 5 are described in detail below.

It should be understood that the steps in the embodiment shown in FIG. 5 are basically the same as those in the embodiment shown in FIG. 4. A difference lies in that after receiving a PDU session resource establishment request message, the first access network device (for example, a macro base station) sends the measurement report request to the terminal device, to determine whether an appropriate second access network device (for example, a micro base station) that serves the terminal device exists.

Specifically, this step is similar to a step before step 401 in FIG. 4, and details are not described herein again.

It should be noted that, in the embodiment shown in FIG. 5, when the terminal device receives a second message sent by the first access network device, where the second message includes first indication information and second indication information, the terminal device may determine, based on the second message, information about a measured cell that is included in the measurement report. Therefore, information about all measured cells does not need to be all reported, and air interface resource overheads are reduced.

For example, the second message may be measurement report request information, and the second message may include the first indication information or the second indication information. The first indication information may be identification information of a network slice, and the second indication information may be identification information of a tracking area.

501. The terminal device initiates a session establishment request, and the requested PDU session is not supported by the first access network device.

Optionally, that the first access network device does not support the PDU session initiated by the terminal device may be: The terminal device reports, to the first access network device, a PDU session corresponding to a network slice supported by the terminal device, so that the first access network device determines that the first access network device does not support the requested PDU session initiated by the terminal device. Alternatively, the terminal device may obtain information about a network slice supported by the first access network device, and the terminal device determines, based on information about a network slice supported by the terminal device and the obtained information about the network slice supported by the first access network device, information about a network slice not supported by the first access network device, and further, determines, based on information about a network slice corresponding to the initiated PDU session, that the first access network device does not support the requested PDU session.

502. The terminal device sends a first message to the first access network device, where the first message includes information about the network slice corresponding to the session to be established by the terminal device. For example, the first message may be an RRC message.

Optionally, the RRC message includes the PDU session establishment request of the terminal device, and the first access network device may determine, based on the PDU session establishment request, the information about the network slice to which the PDU session belongs.

It should be noted that, different from that in step 402 shown in FIG. 4, the RRC message in step 502 does not include information about a measured cell that is obtained by the terminal device.

503. The first access network device sends the PDU session establishment request to a core network device.

It should be noted that before the first access network device sends the PDU session establishment request to the core network device, the first access network device may determine that the first access network device does not support the network slice to which the PDU session belongs.

504. The core network device sends a PDU session resource establishment request to the first access network device.

After receiving the PDU session establishment request sent by the first access network device, the core network device sends the PDU session resource establishment request to the first access network device, where a requested resource is used to establish the PDU session.

For example, the PDU session resource establishment request includes information indicating that the first access network device has a measured cell that supports the network slice to which the PDU session belongs.

For example, the PDU session resource establishment request includes information indicating that the first access network device has a tracking area to which a measured cell that supports the PDU session belongs.

505. The first access network device sends a second message to the terminal device, where the second message includes first indication information or second indication information. The first indication information is used to indicate the terminal device to report a measurement report on at least one measured cell that supports the network slice corresponding to the session. The second indication information is used to indicate the terminal device to report a measurement report on at least one measured cell belonging to a tracking area that supports the network slice corresponding to the session.

Optionally, the second message may be a measurement report request message.

Optionally, the measurement report request message may include an identifier of a measured cell or a TA to be measured.

Optionally, the measurement report request message may include network slice information. Based on the network slice information in the measurement report, the terminal device may add, to the measurement report, only measurement report information of a cell that supports the network slice information, and does not need to report measurement report information of a cell that does not support the network slice information. In this way, air interface resource overheads are reduced.

506. The terminal device sends the measurement report to the first access network device.

The first access network device determines, based on the measurement report, the second access network device that supports the network slice to which the PDU session belongs.

Optionally, the measurement report may include channel quality and identification information of the measured cell or the measured TA.

Optionally, the measurement report may include channel quality of at least one tracking area supporting the network slice to which the PDU session that the terminal device requests to establish belongs.

For example, the first access network device determines the second access network device based on indication information, a correspondence for a network slice, and the measurement report. The indication information is used to indicate a first network slice that is supported by the terminal device but not supported by the first access network device. The indication information may be carried in the RRC message in step 502. The correspondence for the network slice may be information about a network slice corresponding to at least one access network device.

507. The first access network device sends an addition request to the second access network device.

The first access network device does not support the PDU session that the terminal device requests to establish. For example, the first access network device does not support the first network slice, and the PDU session that the terminal device requests to establish needs to be established on the first network slice.

The first access network device determines that there is a second access network device supporting the PDU session that the terminal device requests to establish, and the first access network device sends the addition request to the second access network device, where the request is used to indicate the second access network device to establish the PDU session that the terminal device requests to establish.

For example, it is assumed that the first access network device and the second access network device may interact with each other by using an Xn interface. A correspondence between a network slice and a PDU session may be transferred as an Xn application protocol (xn application protocol, XnAP) message.

508. The second access network device sends an addition request feedback to the first access network device.

For example, the addition request feedback of the second access network device may be used to indicate whether the second access network device allows the terminal device to access and to establish the PDU session.

509. The first access network device sends an RRC reconfiguration request message to the terminal device.

For example, the first access network device sends configuration information to the terminal device, to indicate that the terminal device can further access the second access network device, and the second access network device supports the PDU session that the terminal device requests to establish. In other words, the second access network device supports the network slice to which the PDU session requested to be established belongs, and the terminal device can establish the PDU session via the second access network device without initiating a registration area update.

It should be understood that, when the first access network device sends the reconfiguration request message to the terminal device, it means that the PDU session that the terminal device requests to establish is successfully established.

510. The terminal device sends a reconfiguration complete message to the first access network device.

511. The first access network device sends a PDU session resource establishment request feedback to the core network device.

It should be noted that, in this embodiment of this application, the RRC message may be an RRC reconfiguration message, a measurement request message, an RRC connection reconfiguration message, an RRC setup message, a terminal device capability request message, a terminal device information request message, or a measurement configuration message. This is not limited in the embodiments of this application.

In this embodiment of this application, the first access network device obtains the information about the network slice to which the PDU session that the terminal device requests to establish belongs (where the first access network device does not support the network slice) and the information about the network slice corresponding to the at least one access network device, to determine the second access network device. In this way, the terminal device accesses the second access network device to establish the PDU session, to implement dual connections between the terminal device and the first access network device and between the terminal device and the second access network device, thereby ensuring that there are more network slices that can be used to initiate a session when the registration area is not updated, and improving communication efficiency of the radio access network.

It should be understood that sequence numbers of the foregoing processes do not indicate an execution sequence. The execution sequence of the processes should be determined based on functions and internal logic of the processes, and should not be construed as any limitation on an implementation process of this embodiment of this application.

The communication method according to the embodiments of this application is described in detail above. In this application, the terminal device implements dual connections to the first access network device and the second access network device, to ensure that there are more network slices that can be used to initiate a session when the registration area is not updated, and improve communication efficiency of the radio access network. It should be understood that the terminal device and the first access network device in the embodiments of this application may perform the methods in the foregoing embodiments of this application. Therefore, for specific working processes of the following products, refer to corresponding processes in the foregoing method embodiments.

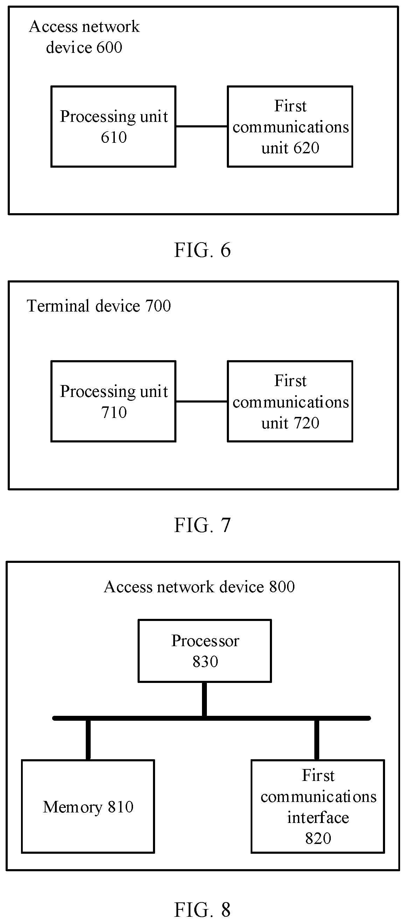

FIG. 6 is a schematic block diagram of an access network device 600 according to an embodiment of this application. It should be understood that the access network device 600 can perform the steps performed by the first access network device in the methods in FIG. 3 to FIG. 5. To avoid repetition, details are not described herein again. The access network device 600 includes a processing unit 610 and a first communications unit 620.

The first communications unit 620 is configured to receive a first message sent by a terminal device, where the first message includes information about a network slice corresponding to a session to be established by the terminal device, and the first access network device does not support the network slice corresponding to the session. The processing unit 610 is configured to determine a second access network device configured to connect to the terminal device, where the second access network device supports the network slice corresponding to the session.

In this embodiment of this application, the first access network device and the second access network device support different network slices. The first access network device establishes a session corresponding to a network slice supported by both the first access network device and the second access network device. The first access network device determines the second access network device, and establishes, via the second access network device, a session corresponding to a network slice that is not supported by the first access network device. In this way, dual connections between the terminal device and the first access network device and between the terminal device and the second access network device are implemented. This ensures that when a registration area is not updated, there are more network slices that can be used to initiate a session, and improves communication efficiency of a radio access network.

For example, the first access network device may be understood as a master access network device (for example, a macro base station), namely, an access network device currently connected to the terminal device, and the second access network device may be understood as a secondary access network device (a micro base station), namely, another access network device to which the terminal device needs to establish dual connections.

Optionally, the processing unit 610 is further configured to determine the second access network device based on the network slice corresponding to the session and information about a network slice supported by at least one access network device.

Optionally, the first communications unit 620 is further configured to: send a second message to the terminal device, where the second message includes first indication information, the first indication information is used to indicate the terminal device to report a measurement report on at least one measured cell, and the measured cell supports the network slice corresponding to the session; and receive the measurement report sent by the terminal device.

Optionally, the first communications unit 620 is further configured to: send a second message to the terminal device, where the second message includes second indication information, the second indication information is used to indicate the terminal device to report a measurement report on at least one measured cell, and the measured cell belongs to a tracking area that supports the network slice corresponding to the session; and receive the measurement report sent by the terminal device.

In an example, the second message may include network slice information. Based on the network slice information in the measurement report, the terminal device may add, to the measurement report, only cell measurement report information that supports the network slice information, and does not need to report cell measurement report information that does not support the network slice information. In this way, air interface resource overheads are reduced.

The first message includes information about channel quality of at least one measured cell.

Optionally, the first communications unit 620 is further configured to send, to the terminal device, information used to indicate an occasion for sending the measurement report.

Optionally, the at least one measured cell supports the network slice corresponding to the session.

Optionally, the processing unit 610 is further configured to determine the second access network device based on the network slice corresponding to the session, network slice supported by at least one access network device, and the information about the channel quality of the at least one measured cell.

Optionally, the first communications unit 620 is further configured to send a third message to the terminal device, where the third message includes information about a tracking area to which the at least one measured cell belongs.

Optionally, the third message further includes information about a network slice corresponding to the tracking area to which the at least one measured cell belongs.

Optionally, the third message may include information about a network slice. The information about the network slice may be the information about the network slice corresponding to the at least one tracking area, or may be information about a network slice corresponding to a measured cell. This is not limited in this application.

Optionally, the access network device further includes a second communications unit. The second communications unit is configured to receive a fourth message sent by a core network device, where the fourth message includes information about a network slice corresponding to at least one tracking area.

It should be understood that the second communications unit and the first communications unit may be a same communications unit, or may be different communications units.

In an example, the fourth message may include information about a network slice corresponding to at least one tracking area included in the registration area of the terminal device.

FIG. 7 is a schematic block diagram of a terminal device 700 according to an embodiment of this application. It should be understood that the terminal device 700 can perform the steps performed by the terminal device in FIG. 3 to FIG. 5. To avoid repetition, details are not described herein again. The terminal device 700 includes a processing unit 710 and a first communications unit 720.

The processing unit 710 is configured to determine information about a network slice corresponding to a to-be-established session. The first communications unit 720 is configured to send a first message to a first access network device when the terminal device determines that a measured cell supporting the network slice corresponding to the session exists, where the first message includes the information about the network slice corresponding to the session, the first access network device does not support the network slice, and the first cell belongs to a second access network device configured to connect to the terminal device.

In this embodiment of this application, before the terminal device sends the first message to the first access network device, the terminal device may determine whether a first cell supporting the network slice corresponding to the session exists. When the terminal device determines that there is a first cell supporting the network slice corresponding to the session, the terminal device determines that the session can be initiated, and then sends the first message to the first access network device.

Optionally, the processing unit 710 is further configured to determine whether the first cell supporting the network slice corresponding to the session exists, where the terminal device is located in a coverage area of the first cell.

Optionally, the processing unit 710 is further configured to determine, based on information about a tracking area to which at least one measured cell belongs and information about a network slice corresponding to the tracking area to which the at least one measured cell belongs, whether the first cell supporting the network slice corresponding to the session exists.

Optionally, the terminal device further includes a second communications unit. The second communications unit is further configured to receive information that is about a network slice corresponding to the at least one tracking area and that is sent by a core network device. The first communications unit 720 is further configured to obtain a system message, where the system message includes the information about the tracking area to which the at least one measured cell belongs.

It should be understood that the second communications unit and the first communications unit may be a same communications unit, or may be different communications units.

Optionally, the first communications unit 720 is further configured to receive a third message sent by the first access network device, where the third message includes the information about the tracking area to which the at least one measured cell belongs. The second communications unit is further configured to receive information that is about a network slice corresponding to the at least one tracking area and that is sent by a core network device.

It should be understood that a communications unit for communication between the terminal device and an access network device and a communications unit for communication between the terminal device and the core network device may be different communications units.

Optionally, the third message may include information about a network slice. The information about the network slice may be the information about the network slice corresponding to the at least one tracking area, or may be information about a network slice corresponding to a measured cell. This is not limited in this application.

Optionally, the first communications unit 720 is further configured to receive a third message sent by the first access network device, where the third message includes the information about the tracking area to which the at least one measured cell belongs and information about a network slice corresponding to the at least one tracking area.

For example, the terminal device determines, based on information about a tracking area to which any measured cell belongs and information about a network slice corresponding to at least one tracking area included in the measured cell, whether the measured cell includes at least one tracking area that supports the network slice corresponding to the session, to determine whether the measured cell supports the network slice corresponding to the session.

In a possible implementation, the at least one tracking area belongs to a current registration area of the terminal device.

It should be noted that the registration area is assigned by the core network device to the terminal device, the measured cell is any cell that can be measured by the terminal device, and the tracking area is a tracking area corresponding to a measured cell that is currently measured. Therefore, the tracking area may be inside or outside the registration area. This is not limited in this application.

The first message includes information about channel quality of at least one measured cell.

Optionally, the first communications unit 720 is further configured to receive information that is used to indicate an occasion for sending the measurement report and that is sent by the first access network device.

In an example, the information about the occasion for sending the measurement report may be information included in a message separately sent by the first access network device to the terminal device.

In an example, the information about the occasion for sending the measurement report may be carried in the third message sent by the first access network device to the terminal device.

Optionally, the first communications unit 720 is further configured to: receive a second message sent by the first access network device, where the second message includes first indication information, the first indication information is used to indicate the terminal device to report a measurement report on the at least one measured cell, and the measured cell supports the network slice corresponding to the session; and receive the measurement report sent by the terminal device.

Optionally, the first communications unit 720 is further configured to: receive a second message sent by the first access network device, where the second message includes second indication information, the second indication information is used to indicate the terminal device to report a measurement report on the at least one measured cell, and the measured cell belongs to a tracking area that supports the network slice corresponding to the session; and receive the measurement report sent by the terminal device.

In an example, the measurement report request message may include network slice information. Based on the network slice information in the measurement report, the terminal device may add, to the measurement report, only cell measurement report information that supports the network slice information, and does not need to report cell measurement report information that does not support the network slice information. In this way, air interface resource overheads are reduced.

Optionally, the at least one measured cell supports the network slice corresponding to the session.

FIG. 8 is a schematic block diagram of an access network device 800 according to an example, which is not encompassed by the claims. It should be understood that the access network device 800 can perform the steps performed by the first access network device in the methods in FIG. 3 to FIG. 5. To avoid repetition, details are not described herein again. The access network device 800 includes:
a memory 810, configured to store a program;
a first communications interface 820, configured to communicate with another device; and
a processor 830, configured to execute the program in the memory 810, where when the program is executed, the processor 830 is configured to receive, through the first communications interface 820, a first message sent by a terminal device, where the first message includes information about a network slice corresponding to a session to be established by the terminal device, and the first access network device does not support the network slice corresponding to the session; and the processor 830 is configured to determine a second access network device configured to connect to the terminal device, where the second access network device supports the network slice corresponding to the session.

In an example, the first access network device may be understood as a master access network device (for example, a macro base station), namely, an access network device currently connected to the terminal device, and the second access network device may be understood as a secondary access network device (a micro base station), namely, another access network device to which the terminal device needs to establish dual connections.

Optionally, the processor 830 is further configured to determine the second access network device based on the network slice corresponding to the session and information about a network slice supported by at least one access network device.

Optionally, the processor 830 is further configured to send a second message to the terminal device through the first communications interface 820, where the second message includes first indication information, the first indication information is used to indicate the terminal device to report a measurement report on at least one measured cell, and the measured cell supports the network slice corresponding to the session. The processor 830 is further configured to receive, through the first communications interface 820, the measurement report sent by the terminal device.

Optionally, the processor 830 is further configured to send a second message to the terminal device through the first communications interface 820, where the second message includes second indication information, the second indication information is used to indicate the terminal device to report a measurement report on at least one measured cell, and the measured cell belongs to a tracking area that supports the network slice corresponding to the session. The processor 830 is further configured to receive, through the first communications interface 820, the measurement report sent by the terminal device.

Optionally, the first message includes information about channel quality of at least one measured cell.

Optionally, the processor 830 is further configured to send, to the terminal device through the first communications interface 820, information used to indicate an occasion for sending the measurement report.

Optionally, the at least one measured cell supports the network slice corresponding to the session.

Optionally, the processor 830 is further configured to determine the second access network device based on the network slice corresponding to the session, network slice supported by at least one access network device, and the information about the channel quality of the at least one measured cell.

Optionally, the processor 830 is further configured to send a third message to the terminal device through the first communications interface 820, where the third message includes the information about the tracking area to which the at least one measured cell belongs.

Optionally, the third message further includes information about a network slice corresponding to the tracking area to which the at least one measured cell belongs.

Optionally, the third message may include information about a network slice. The information about the network slice may be the information about the network slice corresponding to the at least one tracking area, or may be information about a network slice corresponding to a measured cell. This is not limited in this application.

Optionally, the access network device further includes a second communications interface. The processor 830 is further configured to receive, through the second communications interface, a fourth message sent by a core network device, where the fourth message includes information about a network slice corresponding to at least one tracking area.

It should be understood that the second communications interface and the first communications interface may be a same communications interface, or may be different communications interfaces.

It should be understood that the access network device shown in FIG. 8 may be a chip, a circuit, or another type of access network device, for example, a chip or a circuit that may be disposed in an access network device. Further, the communications interface may be replaced with a transceiver. The transceiver includes a receiver and a transmitter. Still further, the access network device 800 may further include a bus system.

The processor 830, the memory 810, the receiver, and the transmitter are connected to each other through the bus system. The processor 830 is configured to execute an instruction stored in the memory 810, to control the receiver to receive a signal and control the transmitter to send a signal, thereby completing the steps performed by the network device in the communication methods in this application. The receiver and the transmitter may be a same physical entity or different physical entities. When being a same physical entity, the receiver and the transmitter may be collectively referred to as a transceiver. The memory 810 may be integrated into the processor 830, or may be separated from the processor 830.

In an implementation, functions of the receiver and the transmitter may be considered to be implemented through a transceiver circuit or a dedicated transceiver chip. It may be considered that the processor 830 is implemented by using a dedicated processing chip, a processing circuit, a processor, or a general-purpose chip.

In another implementation, the access network device provided in this embodiment of this application may be considered to be implemented through a general-purpose computer. That is, program code for implementing functions of the processor 830, the receiver, and the transmitter are stored in the memory, and the general-purpose processor implements the functions of the processor 830, the receiver, and the transmitter by executing the code in the memory.

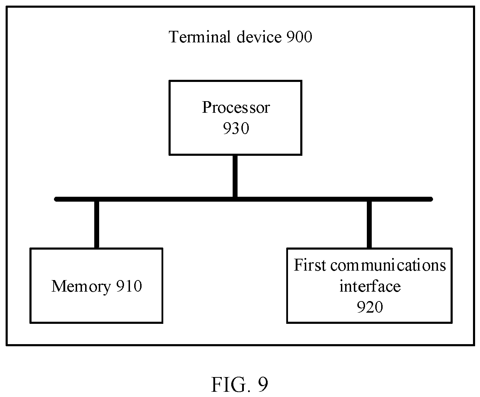

FIG. 9 is a schematic block diagram of a terminal device 900 according to an example, which is not encompassed by the claims. It should be understood that the terminal device 900 can perform the steps performed by the terminal device in the methods in FIG. 3 to FIG. 5. To avoid repetition, details are not described herein again. The terminal device 900 includes:
a memory 910, configured to store a program;
a first communications interface 920, configured to communicate with another device; and
a processor 930, configured to execute the program in the memory 910, where when the program is executed, the processor 930 is configured to determine information about a network slice corresponding to a to-be-established session. The processor 930 sends, through the first communications interface 920, a first message to a first access network device when the terminal device determines that a first cell supporting the network slice corresponding to the session exists, where the first message includes the information about the network slice corresponding to the session, the first access network device does not support the network slice, and the first cell belongs to a second access network device configured to connect to the terminal device.

Optionally, the processor 930 is further configured to determine whether the first cell supporting the network slice corresponding to the session exists.

Optionally, the processor 930 is further configured to determine, based on information about a tracking area to which at least one measured cell belongs and information about a network slice corresponding to the tracking area to which the at least one measured cell belongs, whether the first cell supporting the network slice corresponding to the session exists, where the terminal device is located in a coverage area of the first cell.

Optionally, the terminal device further includes a second communications interface. The processor 930 is further configured to receive, through the second communications interface, information that is about a network slice corresponding to the at least one tracking area and that is sent by a core network device. The processor 930 is further configured to obtain a system message through the first communications interface 920, where the system message includes the information about the tracking area to which the at least one measured cell belongs.

It should be understood that the second communications interface and the first communications interface may be a same communications interface, or may be different communications interfaces. Optionally, the terminal device further includes a second communications interface. The processor 930 is further configured to receive, through the second communications interface, information that is about a network slice corresponding to the at least one tracking area and that is sent by a core network device. The processor 930 is further configured to receive, through the first communications interface 920, a third message sent by the first access network device, where the third message includes the information about the tracking area to which the at least one measured cell belongs.

It should be understood that the second communications interface and the first communications interface may be a same communications interface, or may be different communications interfaces.

Optionally, the at least one tracking area belongs to a current registration area of the terminal device.

Optionally, the processor 930 is further configured to receive, through the first communications interface 920, a third message sent by the first access network device, where the third message includes the information about the tracking area to which the at least one measured cell belongs and information about a network slice corresponding to the at least one tracking area.

Optionally, the third message may include network slice information.

In an example, the network slice information may be the information about the network slice corresponding to the at least one tracking area.

In an example, the network slice information may be information about a network slice corresponding to a measured cell. This is not limited in this application.

Optionally, the first message includes information about channel quality of at least one measured cell.

Optionally, the at least one measured cell supports the network slice corresponding to the session.

Optionally, the processor 930 is further configured to receive, through the first communications interface 920, a second message sent by the first access network device, where the second message includes first indication information or second indication information. The first indication information is used to indicate the terminal device to report a measurement report on at least one measured cell that supports the network slice corresponding to the session. The second indication information is used to indicate the terminal device to report a measurement report on at least one measured cell belonging to a tracking area that supports the network slice corresponding to the session. The processor 930 is further configured to send the measurement report to the first access network device through the first communications interface 920.

Optionally, the processor 930 is further configured to receive, through the first communications interface 920, a second message sent by the first access network device, where the second message includes first indication information, the first indication information is used to indicate the terminal device to report a measurement report on the at least one measured cell, and the measured cell supports the network slice corresponding to the session. The processor 930 is further configured to send the measurement report to the first access network device through the first communications interface 920.

Optionally, the processor 930 is further configured to receive, through the first communications interface 920, a second message sent by the first access network device, where the second message includes second indication information, the second indication information is used to indicate the terminal device to report a measurement report on the at least one measured cell, and the measured cell belongs to a tracking area that supports the network slice corresponding to the session. The processor 930 is further configured to send the measurement report to the first access network device through the first communications interface 920.

Optionally, the second message may be a measurement report request message, the first indication information may be information about the network slice, and the second indication information may be information about the tracking area.

For example, the second message may be a measurement report request message, and the measurement report request message may include network slice information. Based on the network slice information in the measurement report, the terminal device may add, to the measurement report, only measurement report information of a measured cell that supports the network slice information, and does not need to report measurement report information of the measured cell that does not support the network slice information. In this way, air interface resource overheads are reduced.

For example, the second message may be a measurement report request message, and the measurement report request message may include information about a tracking area. The terminal device may include, in the measurement report, only measurement report information of a measured cell that belongs to the tracking area, and does not need to report measurement report information of a measured cell that does not belong to the tracking area. In this way, air interface resource overheads are reduced. Optionally, the processor 930 is further configured to receive, through the first communications interface 920, information that is used to indicate an occasion for sending the measurement report and that is sent by the first access network device.

In an example, the information about the occasion for sending the measurement report may be information included in a message separately sent by the first access network device to the terminal device.

In an example, the information about the occasion for sending the measurement report may also be carried in another message sent by the first access network device to the terminal device. For example, a third message sent by the first access network device to the terminal device may include the information about the occasion for sending the measurement report.

It should be understood that the terminal device shown in FIG. 9 may be a chip, a circuit, or another type of terminal device, for example, a chip or a circuit that may be disposed in a terminal device. Further, the communications interface may be replaced with a transceiver. The transceiver includes a receiver and a transmitter. Still further, the terminal device 900 may further include a bus system.

The processor 930, the memory 910, the receiver, and the transmitter are connected to each other through the bus system. The processor 930 is configured to execute an instruction stored in the memory 910, to control the receiver to receive a signal and control the transmitter to send a signal, thereby completing the steps performed by the network device in the communication methods in this application. The receiver and the transmitter may be a same physical entity or different physical entities. When being a same physical entity, the receiver and the transmitter may be collectively referred to as a transceiver. The memory 910 may be integrated into the processor 930, or may be separated from the processor 930.

In an implementation, functions of the receiver and the transmitter may be considered to be implemented through a transceiver circuit or a dedicated transceiver chip. The processor 930 may be considered to be implemented by using a dedicated processing chip, a processing circuit, a processor, or a general-purpose chip.

In another implementation, the terminal device provided in this embodiment of this application may be considered to be implemented by using a general-purpose computer. That is, program code for implementing functions of the processor 930, the receiver, and the transmitter are stored in the memory, and the general-purpose processor implements the functions of the processor 930, the receiver, and the transmitter by executing the code in the memory.

A person of ordinary skill in the art may be aware that, in combination with the examples described in the embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement a described function for each particular application, but it should not be considered that the implementation goes beyond the scope of this application.

It may be clearly understood by a person skilled in the art that for the purpose of convenient and brief description, for a detailed working process of the described system, apparatus, and unit, refer to a corresponding process in the foregoing method embodiments.

In the several embodiments provided in this application, it should be understood that the disclosed system, apparatus, and method may be implemented in other manners. For example, the described apparatus embodiments are merely examples. For example, division into the units is merely logical function division. There may be another division manner in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions of the embodiments.

In addition, function units in the embodiments of this application may be integrated into one processing unit, or each of the units may exist alone physically, or two or more units may be integrated into one unit.

When the functions are implemented in a form of a software function unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in the embodiments of this application. The storage medium includes: any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method for implementing a dual connection between a terminal device and a first access network device and between the terminal device and a second network device, comprising:
receiving (S301), by the first access network device, a first message sent by the terminal device, wherein the first message comprises information about a network slice corresponding to a session to be established by the terminal device and information about channel quality of at least one measured cell, and the first access network device does not support the network slice corresponding to the session; and
determining (S302), by the first access network device, the second access network device configured to connect to the terminal device, wherein the second access network device supports the network slice corresponding to the session.

2. The communication method according to claim 1, wherein the determining (S302), by the first access network device, the second access network device comprises:
determining, by the first access network device, the second access network device based on the network slice corresponding to the session and information about a network slice supported by at least one access network device.

3. The communication method according to claim 1 or 2, wherein the method further comprises:
sending, by the first access network device, a second message to the terminal device, wherein the second message comprises first indication information, the first indication information is used to indicate the terminal device to report a measurement report on the at least one measured cell, and the measured cell supports the network slice corresponding to the session; and
receiving, by the first access network device, the measurement report sent by the terminal device.

4. The communication method according to claim 1 or 2, wherein the method further comprises:
sending, by the first access network device, a second message to the terminal device, wherein the second message comprises second indication information, the second indication information is used to indicate the terminal device to report a measurement report on the at least one measured cell, and the measured cell belongs to a tracking area that supports the network slice corresponding to the session; and
receiving, by the first access network device the measurement report sent by the terminal device.

5. The communication method according to claims 1 or 2, wherein the at least one measured cell supports the network slice corresponding to the session.

6. The communication method according to any one of claims 1 to 5, wherein the method further comprises:
sending, by the first access network device, a third message to the terminal device, wherein the third message comprises information about a network slice corresponding to a tracking area to which the at least one measured cell belongs.

7. A communication method for implementing a dual connection between a terminal device and a first access network device and between the terminal device and a second network device, comprising:
determining, by the terminal device, information about a network slice corresponding to a to-be-established session; and
sending (S301), by the terminal device, a first message to a first access network device when the terminal device determines that a first cell supporting the network slice corresponding to the session exists, wherein the first message comprises the information about the network slice corresponding to the session and information about channel quality of at least one measured cell, the first access network device does not support the network slice, and the first cell belongs to a second access network device configured to connect to the terminal device.

8. The communication method according to claim 7, wherein determining, by the terminal device, whether the first cell supporting the network slice corresponding to the session exists comprises:
determining, by the terminal device based on information about a tracking area to which the at least one measured cell belongs and information about a network slice corresponding to the tracking area to which the at least one measured cell belongs, whether the first cell supporting the network slice corresponding to the session exists.

9. The communication method according to claim 8, wherein the method further comprises:
obtaining, by the terminal device, a system message, wherein the system message comprises the information about the tracking area to which the at least one measured cell belongs; and
receiving, by the terminal device, information that is about a network slice corresponding to at least one tracking area and that is sent by a core network device.

10. The communication method according to claim 8, wherein the method further comprises:
receiving, by the terminal device, a third message sent by the first access network device, wherein the third message comprises the information about the tracking area to which the at least one measured cell belongs; and
receiving, by the terminal device, information that is about a network slice corresponding to the at least one tracking area and that is sent by a core network device.

11. The communication method according to any one of claims 7 to 10, wherein the method further comprises:
receiving, by the terminal device, a second message sent by the first access network device, wherein the second message comprises first indication information, the first indication information is used to indicate the terminal device to report a measurement report on the at least one measured cell, and the measured cell supports the network slice corresponding to the session; and
sending, by the terminal device, the measurement report to the first access network device.

12. The communication method according to any one of claims 7 to 10, wherein the method further comprises:
receiving, by the terminal device, a second message sent by the first access network device, wherein the second message comprises second indication information, the second indication information is used to indicate the terminal device to report a measurement report on the at least one measured cell, and the measured cell belongs to a tracking area that supports the network slice corresponding to the session; and
sending, by the terminal device, the measurement report to the first access network device.

13. An access network device (600), wherein the access network device is a first access network device for implementing a dual connection between a terminal device and the first access network device and between the terminal device and a second network device, and comprises:
a first communications unit (620), configured to receive a first message sent by the terminal device, wherein the first message comprises information about a network slice corresponding to a session to be established by the terminal device and information about channel quality of at least one measured cell, and the first access network device does not support the network slice corresponding to the session; and
a processing unit (610), configured to determine the second access network device configured to connect to the terminal device, wherein the second access network device supports the network slice corresponding to the session.

14. A terminal device (700) terier for implementing a dual connection between the terminal device and a first access network device and between the terminal device and a second network device, comprising:
a processing unit (710), configured to determine information about a network slice corresponding to a to-be-established session; and
a first communications unit (720) configured to send a first message to the first access network device when the processing unit determines that a first cell supporting the network slice corresponding to the session exists, wherein the first message comprises the information about the network slice corresponding to the session and information about channel quality of at least one measured cell, the first access network device does not support the network slice, and the first cell belongs to the second access network device configured to connect to the terminal device.

## Patentansprüche

1. Kommunikationsverfahren zum Implementieren einer Dualverbindung zwischen einem Endgerät und einer ersten Zugangsnetzwerkvorrichtung und zwischen dem Endgerät und einer zweiten Netzwerkvorrichtung, das umfasst:
Empfangen (S301), durch die erste Zugangsnetzwerkvorrichtung, einer ersten Nachricht, die durch das Endgerät gesendet wird, wobei die erste Nachricht Informationen über einen Netzwerk-Slice, der einer Sitzung, die durch das Endgerät eingerichtet werden soll, entspricht, und Informationen über eine Kanalqualität von mindestens einer gemessenen Zelle umfasst, und die erste Zugangsnetzwerkvorrichtung den Netzwerk-Slice, der der Sitzung entspricht, nicht unterstützt; und
Bestimmen (S302), durch die erste Zugangsnetzwerkvorrichtung, der zweiten Zugangsnetzwerkvorrichtung, die konfiguriert ist, um sich mit dem Endgerät zu verbinden, wobei die zweite Zugangsnetzwerkvorrichtung den Netzwerk-Slice, der der Sitzung entspricht, unterstützt.

2. Kommunikationsverfahren nach Anspruch 1, wobei das Bestimmen (S302), durch die erste Zugangsnetzwerkvorrichtung, der zweiten Zugangsnetzwerkvorrichtung umfasst:
Bestimmen, durch die erste Zugangsnetzwerkvorrichtung, der zweiten Zugangsnetzwerkvorrichtung basierend auf dem Netzwerk-Slice, der der Sitzung entspricht, und Informationen über einen Netzwerk-Slice, der durch mindestens eine Zugangsnetzwerkvorrichtung unterstützt wird.

3. Kommunikationsverfahren nach Anspruch 1 oder 2, wobei das Verfahren ferner umfasst:
Senden, durch die erste Zugangsnetzwerkvorrichtung, einer zweiten Nachricht an das Endgerät, wobei die zweite Nachricht erste Anzeigeinformationen umfasst, die ersten Anzeigeinformationen verwendet werden, um dem Endgerät anzuzeigen, einen Messbericht über die mindestens eine gemessene Zelle zu berichten, und die gemessene Zelle den Netzwerk-Slice, der der Sitzung entspricht, unterstützt; und
Empfangen, durch die erste Zugangsnetzwerkvorrichtung, des Messberichts, der durch das Endgerät gesendet wird.

4. Kommunikationsverfahren nach Anspruch 1 oder 2, wobei das Verfahren ferner umfasst:
Senden, durch die erste Zugangsnetzwerkvorrichtung, einer zweiten Nachricht an das Endgerät, wobei die zweite Nachricht zweite Anzeigeinformationen umfasst, die zweiten Anzeigeinformationen verwendet werden, um dem Endgerät anzuzeigen, einen Messbericht über die mindestens eine gemessene Zelle zu berichten, und die gemessene Zelle zu einem Verfolgungsbereich gehört, der den Netzwerk-Slice, der der Sitzung entspricht, unterstützt; und
Empfangen, durch die erste Zugangsnetzwerkvorrichtung, des Messberichts, der durch das Endgerät gesendet wird.

5. Kommunikationsverfahren nach Anspruch 1 oder 2, wobei die mindestens eine gemessene Zelle den Netzwerk-Slice, der der Sitzung entspricht, unterstützt.

6. Kommunikationsverfahren nach einem der Ansprüche 1 bis 5, wobei das Verfahren ferner umfasst:
Senden, durch die erste Zugangsnetzwerkvorrichtung, einer dritten Nachricht an das Endgerät, wobei die dritte Nachricht Informationen über einen Netzwerk-Slice umfasst, der einem Verfolgungsbereich, zu dem die mindestens eine gemessene Zelle gehört, entspricht.

7. Kommunikationsverfahren zum Implementieren einer Dualverbindung zwischen einem Endgerät und einer ersten Zugangsnetzwerkvorrichtung und zwischen dem Endgerät und einer zweiten Netzwerkvorrichtung, das umfasst:
Bestimmen, durch das Endgerät, von Informationen über einen Netzwerk-Slice, der einer einzurichtenden Sitzung entspricht; und
Senden (S301), durch das Endgerät, einer ersten Nachricht an eine erste Zugangsnetzwerkvorrichtung, wenn das Endgerät bestimmt, dass eine erste Zelle existiert, die den Netzwerk-Slice, der der Sitzung entspricht, unterstützt, wobei die erste Nachricht die Informationen über den Netzwerk-Slice, der der Sitzung entspricht, und Informationen über die Kanalqualität von mindestens einer gemessenen Zelle umfasst, die erste Zugangsnetzwerkvorrichtung den Netzwerk-Slice nicht unterstützt und die erste Zelle zu einer zweiten Zugangsnetzwerkvorrichtung gehört, die konfiguriert ist, um sich mit dem Endgerät zu verbinden.

8. Kommunikationsverfahren nach Anspruch 7, wobei das Bestimmen, durch das Endgerät, ob die erste Zelle existiert, die den Netzwerk-Slice, der der Sitzung entspricht, unterstützt, umfasst:
Bestimmen, durch das Endgerät, basierend auf Informationen über einen Verfolgungsbereich, zu dem die mindestens eine gemessene Zelle gehört, und Informationen über einen Netzwerk-Slice, der dem Verfolgungsbereich, zu dem die mindestens eine gemessene Zelle gehört, entspricht, ob die erste Zelle existiert, die den Netzwerk-Slice, der der Sitzung entspricht, unterstützt.

9. Kommunikationsverfahren nach Anspruch 8, wobei das Verfahren ferner umfasst:
Erhalten, durch das Endgerät, einer Systemnachricht, wobei die Systemnachricht die Informationen über den Verfolgungsbereich, zu dem die mindestens eine gemessene Zelle gehört, umfasst; und
Empfangen, durch das Endgerät, von Informationen, die sich auf einen Netzwerk-Slice, der mindestens einem Verfolgungsbereich entspricht, beziehen und die durch eine Kernnetzwerkvorrichtung gesendet werden.

10. Kommunikationsverfahren nach Anspruch 8, wobei das Verfahren ferner umfasst:
Empfangen, durch das Endgerät, einer dritten Nachricht, die durch die erste Zugangsnetzwerkvorrichtung gesendet wird, wobei die dritte Nachricht die Informationen über den Verfolgungsbereich, zu dem die mindestens eine gemessene Zelle gehört, umfasst; und
Empfangen, durch das Endgerät, von Informationen, die sich auf einen Netzwerk-Slice, der dem mindestens einen Verfolgungsbereich entspricht, beziehen und die durch eine Kernnetzwerkvorrichtung gesendet werden.

11. Kommunikationsverfahren nach einem der Ansprüche 7 bis 10, wobei das Verfahren ferner umfasst:
Empfangen, durch das Endgerät, einer zweiten Nachricht, die durch die erste Zugangsnetzwerkvorrichtung gesendet wird, wobei die zweite Nachricht erste Anzeigeinformationen umfasst, die ersten Anzeigeinformationen verwendet werden, um dem Endgerät anzuzeigen, einen Messbericht über die mindestens eine gemessene Zelle zu berichten, und die gemessene Zelle den Netzwerk-Slice, der der Sitzung entspricht, unterstützt; und
Senden, durch das Endgerät, des Messberichts an die erste Zugangsnetzwerkvorrichtung.

12. Kommunikationsverfahren nach einem der Ansprüche 7 bis 10, wobei das Verfahren ferner umfasst:
Empfangen, durch das Endgerät, einer zweiten Nachricht, die durch die erste Zugangsnetzwerkvorrichtung gesendet wird, wobei die zweite Nachricht zweite Anzeigeinformationen umfasst, die zweiten Anzeigeinformationen verwendet werden, um dem Endgerät anzuzeigen, einen Messbericht über die mindestens eine gemessene Zelle zu berichten, und die gemessene Zelle zu einem Verfolgungsbereich gehört, der den Netzwerk-Slice, der der Sitzung entspricht, unterstützt; und
Senden, durch das Endgerät, des Messberichts an die erste Zugangsnetzwerkvorrichtung.

13. Zugangsnetzwerkvorrichtung (600), wobei die Zugangsnetzwerkvorrichtung eine erste Zugangsnetzwerkvorrichtung zum Implementieren einer Dualverbindung zwischen einem Endgerät und der ersten Zugangsnetzwerkvorrichtung und zwischen dem Endgerät und einer zweiten Netzwerkvorrichtung ist, und umfasst:
eine erste Kommunikationseinheit (620), die konfiguriert ist, um eine erste Nachricht, die durch das Endgerät gesendet wird, zu empfangen, wobei die erste Nachricht Informationen über einen Netzwerk-Slice, der einer Sitzung, die durch das Endgerät eingerichtet werden soll, entspricht, und Informationen über die Kanalqualität von mindestens einem umfasst gemessenen Zelle umfasst, und die erste Zugangsnetzwerkvorrichtung den Netzwerk-Slice, der der Sitzung entspricht, nicht unterstützt; und
eine Verarbeitungseinheit (610), die konfiguriert ist, um die zweite Zugangsnetzwerkvorrichtung zu bestimmen, die konfiguriert ist, um sich mit dem Endgerät zu verbinden, wobei die zweite Zugangsnetzwerkvorrichtung den Netzwerk-Slice, der der Sitzung entspricht, unterstützt.

14. Endgerät (700) zum Implementieren einer Dualverbindung zwischen dem Endgerät und einer ersten Zugangsnetzwerkvorrichtung und zwischen dem Endgerät und einer zweiten Netzwerkvorrichtung, das umfasst:
eine Verarbeitungseinheit (710), die konfiguriert ist, um Informationen über einen Netzwerk-Slice, der einer einzurichtenden Sitzung entspricht, zu bestimmen; und
eine erste Kommunikationseinheit (720), die konfiguriert ist, um eine erste Nachricht an die erste Zugangsnetzwerkvorrichtung zu senden, wenn die Verarbeitungseinheit bestimmt, dass eine erste Zelle existiert, die den Netzwerk-Slice, der der Sitzung entspricht unterstützt, wobei die erste Nachricht die Informationen über den Netzwerk-Slice, der der Sitzung entspricht, und Informationen über die Kanalqualität von mindestens einer gemessenen Zelle umfasst, wobei die erste Zugangsnetzwerkvorrichtung den Netzwerk-Slice nicht unterstützt und die erste Zelle zu der zweiten Zugangsnetzwerkvorrichtung gehört, die konfiguriert ist, um sich mit dem Endgerät zu verbinden.

## Revendications

1. Procédé de communication permettant de mettre en oeuvre une double connexion entre un dispositif terminal et un premier dispositif de réseau d'accès et entre le dispositif terminal et un second dispositif de réseau, comprenant :
la réception (S301), par le premier dispositif de réseau d'accès, d'un premier message envoyé par le dispositif terminal, dans lequel le premier message comprend des informations concernant une tranche de réseau correspondant à une session à établir par le dispositif terminal et des informations concernant la qualité de canal d'au moins une cellule mesurée et le premier dispositif de réseau d'accès ne prend pas en charge la tranche de réseau correspondant à la session ; et
la détermination (S302), par le premier dispositif de réseau d'accès, du second dispositif de réseau d'accès configuré pour se connecter au dispositif terminal, dans lequel le second dispositif de réseau d'accès prend en charge la tranche de réseau correspondant à la session.

2. Procédé de communication selon la revendication 1, dans lequel la détermination (S302), par le premier dispositif de réseau d'accès, du second dispositif de réseau d'accès comprend :
la détermination, par le premier dispositif de réseau d'accès, du second dispositif de réseau d'accès sur la base de la tranche de réseau correspondant à la session et des informations concernant une tranche de réseau prise en charge par au moins un dispositif de réseau d'accès.

3. Procédé de communication selon la revendication 1 ou 2, dans lequel le procédé comprend en outre :
l'envoi, par le premier dispositif de réseau d'accès, d'un deuxième message au dispositif terminal, dans lequel le deuxième message comprend des premières informations d'indication, les premières informations d'indication sont utilisées pour indiquer au dispositif terminal de rapporter un rapport de mesure sur l'au moins une cellule mesurée, et la cellule mesurée prend en charge la tranche de réseau correspondant à la session ; et
la réception, par le premier dispositif de réseau d'accès, du rapport de mesure envoyé par le dispositif terminal.

4. Procédé de communication selon la revendication 1 ou 2, dans lequel le procédé comprend en outre :
l'envoi, par le premier dispositif de réseau d'accès, d'un deuxième message au dispositif terminal, dans lequel le deuxième message comprend des secondes informations d'indication, les secondes informations d'indication sont utilisées pour indiquer au dispositif terminal de rapporter un rapport de mesure sur l'au moins une cellule mesurée, et la cellule mesurée appartient à une zone de suivi qui prend en charge la tranche de réseau correspondant à la session ; et
la réception, par le premier dispositif de réseau d'accès, du rapport de mesure envoyé par le dispositif terminal.

5. Procédé de communication selon les revendications 1 ou 2, dans lequel l'au moins une cellule mesurée prend en charge la tranche de réseau correspondant à la session.

6. Procédé de communication selon l'une quelconque des revendications 1 à 5, dans lequel le procédé comprend en outre :
l'envoi, par le premier dispositif de réseau d'accès, d'un troisième message au dispositif terminal, dans lequel le troisième message comprend des informations concernant une tranche de réseau correspondant à une zone de suivi à laquelle appartient l'au moins une cellule mesurée.

7. Procédé de communication permettant de mettre en oeuvre une double connexion entre un dispositif terminal et un premier dispositif de réseau d'accès et entre le dispositif terminal et un second dispositif de réseau, comprenant :
la détermination, par le dispositif terminal, d'informations concernant une tranche de réseau correspondant à une session à établir ; et
l'envoi (S301), par le dispositif terminal, d'un premier message à un premier dispositif de réseau d'accès lorsque le dispositif terminal détermine qu'une première cellule prenant en charge la tranche de réseau correspondant à la session existe, dans lequel le premier message comprend les informations concernant la tranche de réseau correspondant à la session et les informations concernant la qualité de canal d'au moins une cellule mesurée, le premier dispositif de réseau d'accès ne prend pas en charge la tranche de réseau et la première cellule appartient à un second dispositif de réseau d'accès configuré pour se connecter au dispositif terminal.

8. Procédé de communication selon la revendication 7, dans lequel la détermination, par le dispositif terminal, du fait de savoir si la première cellule prenant en charge la tranche de réseau correspondant à la session existe comprend :
la détermination, par le dispositif terminal sur la base d'informations concernant une zone de suivi à laquelle appartient l'au moins une cellule mesurée et d'informations concernant une tranche de réseau correspondant à la zone de suivi à laquelle appartient l'au moins une cellule mesurée, du fait de savoir si la première cellule prenant en charge la tranche de réseau correspondant à la session existe.

9. Procédé de communication selon la revendication 8, dans lequel le procédé comprend en outre :
l'obtention, par le dispositif terminal, d'un message système, dans lequel le message système comprend les informations concernant la zone de suivi à laquelle appartient l'au moins une cellule mesurée ; et
la réception, par le dispositif terminal, d'informations qui concernent une tranche de réseau correspondant à au moins une zone de suivi et qui sont envoyées par un dispositif de réseau central.

10. Procédé de communication selon la revendication 8, dans lequel le procédé comprend en outre :
la réception, par le dispositif terminal, d'un troisième message envoyé par le premier dispositif de réseau d'accès, dans lequel le troisième message comprend les informations concernant la zone de suivi à laquelle appartient l'au moins une cellule mesurée ; et
la réception, par le dispositif terminal, d'informations qui concernent une tranche de réseau correspondant à l'au moins une zone de suivi et qui sont envoyées par un dispositif de réseau central.

11. Procédé de communication selon l'une quelconque des revendications 7 à 10, dans lequel le procédé comprend en outre :
la réception, par le dispositif terminal, d'un deuxième message envoyé par le premier dispositif de réseau d'accès, dans lequel le deuxième message comprend des premières informations d'indication, les premières informations d'indication sont utilisées pour indiquer au dispositif terminal de rapporter un rapport de mesure sur l'au moins une cellule mesurée, et la cellule mesurée prend en charge la tranche de réseau correspondant à la session ; et
l'envoi, par le dispositif terminal, du rapport de mesure au premier dispositif de réseau d'accès.

12. Procédé de communication selon l'une quelconque des revendications 7 à 10, dans lequel le procédé comprend en outre :
la réception, par le dispositif terminal, d'un deuxième message envoyé par le premier dispositif de réseau d'accès, dans lequel le deuxième message comprend des secondes informations d'indication, les secondes informations d'indication sont utilisées pour indiquer au dispositif terminal de rapporter un rapport de mesure sur l'au moins une cellule mesurée, et la cellule mesurée appartient à une zone de suivi qui prend en charge la tranche de réseau correspondant à la session ; et
l'envoi, par le dispositif terminal, du rapport de mesure au premier dispositif de réseau d'accès.

13. Dispositif de réseau d'accès (600), dans lequel le dispositif de réseau d'accès est un premier dispositif de réseau d'accès permettant de mettre en oeuvre une double connexion entre un dispositif terminal et le premier dispositif de réseau d'accès et entre le dispositif terminal et un second dispositif de réseau, et comprend :
une première unité de communications (620), configurée pour recevoir un premier message envoyé par le dispositif terminal, dans lequel le premier message comprend des informations concernant une tranche de réseau correspondant à une session à établir par le dispositif terminal et des informations concernant la qualité de canal d'au moins une cellule mesurée, et le premier dispositif de réseau d'accès ne prend pas en charge la tranche de réseau correspondant à la session ; et
une unité de traitement (610), configurée pour déterminer le second dispositif de réseau d'accès configuré pour se connecter au dispositif terminal, dans lequel le second dispositif de réseau d'accès prend en charge la tranche de réseau correspondant à la session.

14. Dispositif terminal (700) permettant de mettre en oeuvre une double connexion entre le dispositif terminal et un premier dispositif de réseau d'accès et entre le dispositif terminal et un second dispositif de réseau, comprenant :
une unité de traitement (710), configurée pour déterminer des informations concernant une tranche de réseau correspondant à une session à établir ; et
une première unité de communications (720) configurée pour envoyer un premier message au premier dispositif de réseau d'accès lorsque l'unité de traitement détermine qu'une première cellule prenant en charge la tranche de réseau correspondant à la session existe, dans lequel le premier message comprend les informations concernant la tranche de réseau correspondant à la session et des informations concernant la qualité de canal d'au moins une cellule mesurée, le premier dispositif de réseau d'accès ne prend pas en charge la tranche de réseau et la première cellule appartient au second dispositif de réseau d'accès configuré pour se connecter au dispositif terminal.
